(19) **Europäisches Patentamt / European Patent Office / Office européen des brevets**

(11) **EP 3 054 284 B1**

(12) # FASCICULE DE BREVET EUROPEEN

(45) Date de publication et mention de la délivrance du brevet:
**04.03.2020 Bulletin 2020/10**

(51) Int Cl.:
*G01N 21/64* [(2006.01)]  *G01N 21/65* [(2006.01)]
*G01N 21/27* [(2006.01)]  *G01J 3/44* [(2006.01)]
*G01J 3/02* [(2006.01)]  *G02B 21/00* [(2006.01)]

(21) Numéro de dépôt: **16154147.9**

(22) Date de dépôt: **03.02.2016**

(54) **PROCÉDÉ DE CORRECTION D'UN SIGNAL RAMAN RÉTRODIFFUSÉ PAR UN ÉCHANTILLON, ET DISPOSITIF ASSOCIÉ**

VERFAHREN ZUM KORRIGIEREN EINES VON EINER PROBE ZURÜCKGESTREUTEN RAMAN SIGNALS, UND ENTSPRECHENDE VORRICHTUNG

METHOD FOR CORRECTING A RAMAN SIGNAL BACKSCATTERED BY A SAMPLE, AND ASSOCIATED DEVICE

(84) Etats contractants désignés:
**AL AT BE BG CH CY CZ DE DK EE ES FI FR GB GR HR HU IE IS IT LI LT LU LV MC MK MT NL NO PL PT RO RS SE SI SK SM TR**

(30) Priorité: **06.02.2015 FR 1550983**

(43) Date de publication de la demande:
**10.08.2016 Bulletin 2016/32**

(73) Titulaire: **Commissariat à l'Énergie Atomique et aux Énergies Alternatives
75015 Paris (FR)**

(72) Inventeurs:
- **ROIG, Blandine
  56160 GUEMENE SUR SCORFF (FR)**
- **KOENIG, Anne
  38410 Saint Martin d'Uriage (FR)**
- **DINTEN, Jean-Marc
  69008 LYON (FR)**
- **PERRAUT, François
  38134 Saint Joseph de Riviere (FR)**

(74) Mandataire: **GIE Innovation Competence Group
310, avenue Berthelot
69372 Lyon Cedex 08 (FR)**

(56) Documents cités:
**US-A1- 2011 301 438**

- **B Roig ET AL: "Correction of deep Raman spectra distorted by elastic scattering" In: "Annual Research Report 2014: Microtechnologies for Biology and Healthcare", 31 décembre 2014 (2014-12-31), CEA Leti, XP055234721, page 25, * le document en entier ***
- **YANG JING ET AL: "Quantitative Raman spectrometry: The accurate determination of analytes in solution phase of turbid media", CHEMOMETRICS AND INTELLIGENT LABORATORY SYSTEMS, ELSEVIER SCIENCE PUBLISHERS B.V. AMSTERDAM, NL, vol. 126, 28 avril 2013 (2013-04-28), pages 6-10, XP028569840, ISSN: 0169-7439, DOI: 10.1016/J.CHEMOLAB.2013.04.011**
- **ANNE KOENIG ET AL: "Diffuse reflectance spectroscopy: a clinical study of tuberculin skin tests reading", PROCEEDINGS OF SPIE, vol. 8592, 21 février 2013 (2013-02-21), pages 85920S-85920S-8, XP055090850, ISSN: 0277-786X, DOI: 10.1117/12.2002314**
- **"Confocal microscopy", Wikipedia, 5 février 2015 (2015-02-05), XP055234612, Extrait de l'Internet: URL:https://en.wikipedia.org/w/index.php?title=Special:Book&bookcmd=download&collection_id=d09ad731071eaf1d844acec4a3af9022b95c18dc&writer=rdf2latex&return_to=Confocal microscopy [extrait le 2015-12-08]**
- **STEVEN L. JACQUES ET AL: "Reflectance confocal microscopy of optical phantoms", BIOMEDICAL OPTICS EXPRESS, vol. 3, no. 6, 1 juin 2012 (2012-06-01), page 1162, XP055234530, United States ISSN: 2156-7085, DOI: 10.1364/BOE.3.001162**

- A. M. MACDONALD ET AL: "On Confocal Raman Spectroscopy of Semicrystalline Polymers: The Effect of Optical Scattering", APPLIED SPECTROSCOPY., vol. 57, no. 12, 1 décembre 2003 (2003-12-01), pages 1475-1481, XP055234558, US ISSN: 0003-7028, DOI: 10.1366/000370203322640107

- FREEBODY N A ET AL: "On optical depth profiling using confocal Raman spectroscopy", ANALYTICAL AND BIOANALYTICAL CHEMISTRY, SPRINGER, BERLIN, DE, vol. 396, no. 8, 15 novembre 2009 (2009-11-15), pages 2813-2823, XP019798674, ISSN: 1618-2650

## Description

### Domaine technique

L'invention se situe dans le domaine de la caractérisation des échantillons, et notamment des échantillons biologiques, et plus particulièrement la peau.

### Description de l'art antérieur

Les mesures optiques permettant de caractériser des échantillons sont répandues. Il s'agit en particulier de caractériser les propriétés optiques, ou la nature des matériaux qui composent un échantillon. On peut notamment citer les mesures basées sur la détection d'un signal rétrodiffusé par un échantillon illuminé par un faisceau lumineux. Il s'agit en particulier de la spectrométrie Raman, l'imagerie de fluorescence ou la spectrométrie de réflectance diffuse.

La spectroscopie Raman fait partie des méthodes couramment utilisées. Elle est basée sur la diffusion inélastique des photons dans un milieu, suite à l'illumination du milieu par un faisceau de lumière monochromatique. Les photons résultant de ces interactions inélastiques sont détectés puis traités par un dispositif de spectroscopie, permettant de former un spectre Raman. Un tel spectre comprend généralement une pluralité de pics centrés sur des nombres d'ondes, ces derniers constituant une signature des espèces chimiques présentes dans un échantillon.

Appliquée à la peau, et en configuration confocale, la spectrométrie Raman peut en particulier être adaptée à la classification entre un tissu sain et un tissu malade, ou le suivi de la migration d'un produit au sein des différentes couches constituant la peau.

Cependant, la peau est un milieu diffusant et au-delà d'une certaine profondeur, les spectres Raman sont fortement dégradés par les perturbations liées à la diffusion de la lumière dans l'échantillon, qu'il s'agisse de la lumière du faisceau d'excitation, que de la lumière ré-émise à l'issue de la diffusion inélastique.

Le document Yang et al., "Quantitative Raman spectrometry: The accurate détermination of analytes in solution phase of turbid média", Chemometr. Intell. Lab., 126 (2013), 6-10, divulgue l'acquisition des spectres Raman par un spectromètre confocal Raman, et la correction des valeurs mesurées pour les effets de la diffusion de la lumière par des échantillons troubles.

Une autre méthode optique permettant la caractérisation d'un échantillon est la mesure de la fluorescence, qu'il s'agisse de fluorescence endogène ou exogène. Le principe est d'illuminer un échantillon, généralement à l'aide d'un faisceau dont la largeur spectrale est étroite et centrée sur une longueur d'onde d'excitation d'un fluorophore, puis de mesurer le signal de fluorescence émis par le fluorophore en réponse au faisceau d'illumination. L'objectif est alors de localiser la position des fluorophores dans le milieu.

Dans ce cas également, les mesures peuvent être perturbées par la diffusion de la lumière dans le milieu, qu'il s'agisse de la lumière d'excitation incidente ou de la lumière de fluorescence, ré-émise suite à l'excitation du fluorophore.

Le document US 2011/0301438 A1 divulgue l'utilisation d'un microscope confocal pour effectuer l'imagerie par fluorescence d'un échantillon de tissu, ainsi que la correction d'atténuation du signal en fonction de la profondeur.

L'invention se propose de répondre à ces inconvénients, et d'améliorer la qualité de signaux optiques émis par un échantillon diffusant en réponse à une illumination.

### Description de l'invention

Un objet de l'invention est un procédé de correction d'un signal optique produit par un échantillon selon la revendication 1.

Ladite propriété optique de diffusion est de préférence déterminée à une longueur d'onde du premier faisceau lumineux. Elle peut n'être déterminée qu'à cette longueur d'onde.

La première source de lumière peut être une source laser, le photodétecteur étant un spectrophotomètre Raman, de telle sorte que ledit premier signal mesuré est un spectre Raman.

La fonction de correction peut comprendre une fonction exponentielle, notamment croissante, l'exposant de l'exponentielle dépendant d'un terme de correction, déterminé en fonction de ladite propriété optique de diffusion, et de ladite profondeur de mesure.

Cette fonction de correction peut comprendre un produit dudit spectre Raman par ladite exponentielle croissante.

Cette fonction de correction peut comprendre une addition dudit spectre Raman en profondeur audit produit dudit spectre Raman par ladite exponentielle croissante.

Ledit premier rayonnement optique de rétrodiffusion peut également être un signal de fluorescence.

Selon un mode de réalisation, ladite propriété optique est un coefficient décrivant la diffusion de la lumière dans ledit échantillon, en particulier un coefficient de diffusion réduit, un coefficient de diffusion ou un facteur d'anisotropie de ladite diffusion.

La détermination de ladite propriété optique peut comprendre les étapes de :

- deuxième illumination d'une surface de l'échantillon à l'aide d'un deuxième faisceau lumineux, de façon à former, à la surface dudit échantillon, une zone élémentaire d'illumination, correspondant à la partie de ladite surface éclairée par ledit deuxième faisceau lumineux,
- détection de N deuxièmes signaux optiques, rétrodiffusés par l'échantillon, chaque deuxième signal optique émanant de la surface de l'échantillon à une distance, dite distance de rétrodiffusion, de ladite zone élémentaire d'illumination, N étant un entier supérieur ou égal à 1, de manière à former autant de deuxièmes signaux détectés,
- détermination d'au moins une propriété optique de l'échantillon, par comparaison entre :

    - une fonction de chaque deuxième signal ainsi détecté,
    - et une pluralité d'estimations de ladite fonction chaque estimation étant réalisée en considérant une valeur prédéterminée de ladite propriété optique.

La propriété optique à déterminer peut être un facteur d'anisotropie, représentant un angle moyen de diffusion, un coefficient de diffusion réduit, un coefficient de diffusion ou un coefficient d'absorption.

Au moins une distance de rétrodiffusion peut être inférieure à 200 $\mu$m. Le procédé peut alors comprendre :

- la détection d'au moins deux signaux optiques rétrodiffusés émanant de la surface de l'échantillon,

    - un signal optique rétrodiffusé proche, émis à une distance de rétrodiffusion inférieure à 200 $\mu$m ;
    - un signal optique rétrodiffusé éloigné, émis à une distance de rétrodiffusion supérieure celle correspondant audit signal rétrodiffusé proche, et par exemple supérieure à 200 $\mu$m ;

- la détermination d'une première propriété optique à partir du signal proche,
- la détermination d'une deuxième propriété optique, différente de la première propriété optique, à partir du signal éloigné.

Le procédé peut également comprendre la détection d'au moins deux signaux optiques rétrodiffusés proches, à deux distances de rétrodiffusion différentes, les deux distances étant inférieures à 200 $\mu$m.

L'échantillon examiné peut être la peau d'un humain ou d'un animal.

L'intensité du signal optique rétrodiffusé peut être mesurée à une pluralité de longueurs d'ondes.

Un autre objet de l'invention est un dispositif de caractérisation d'un échantillon, selon la revendication 8.

Le dispositif peut comporter un microprocesseur, apte à corriger ledit premier signal optique, en mettant en oeuvre le procédé précédemment décrit.

Le dispositif peut comporter :

- une deuxième source de lumière, apte à émettre un deuxième faisceau lumineux vers une surface dudit échantillon, de façon à former, sur ladite surface, une zone élémentaire d'illumination,
- au moins une fibre optique de détection, s'étendant entre une extrémité proximale, apte à être couplée à un deuxième photodétecteur et une extrémité distale, apte à collecter un deuxième signal optique rétrodiffusé par l'échantillon lorsqu'il est exposé audit deuxième faisceau lumineux,
- un deuxième système optique comportant tout ou partie du premier système optique, ledit deuxième système optique présentant un facteur de grandissement et un axe optique,
- ledit deuxième système optique étant apte à conjuguer l'extrémité distale de chaque fibre optique de détection à une zone élémentaire de détection située sur la surface de l'échantillon,

de telle sorte que la distance entre la zone élémentaire d'illumination et chaque zone élémentaire de détection, perpendiculairement audit axe optique, est fonction dudit facteur de grandissement.

Le dispositif peut comporter un microprocesseur apte à déterminer une propriété optique de diffusion en mettant en œuvre des étapes telles que décrites dans cette demande, à partir de chaque deuxième signal optique rétrodiffusé.

Dans un mode de réalisation, ledit deuxième système optique est également apte à conjuguer ladite deuxième source de lumière à une zone élémentaire d'illumination, située à la surface de l'échantillon.

Le dispositif peut comporter un élément de renvoi, apte à diriger :

- ledit premier faisceau lumineux vers l'échantillon,
- ou ledit premier signal optique rétrodiffusé par l'échantillon vers ledit premier photodétecteur,
- ou ledit deuxième faisceau lumineux vers l'échantillon,

- ou ledit deuxième signal optique vers ledit deuxième photodétecteur.

Le dispositif peut également comporter :

- une première fibre optique de détection, dont l'extrémité distale est située à une première distance dudit deuxième faisceau lumineux,
- une deuxième fibre optique de détection, dont l'extrémité distale est située à une deuxième distance dudit deuxième faisceau lumineux, ladite deuxième distance étant supérieure à ladite première distance.

La deuxième source de lumière peut comporter une fibre optique d'illumination, s'étendant entre :

- une extrémité proximale, notamment apte à recevoir de la lumière,
- et une extrémité distale, apte à émettre ledit deuxième faisceau lumineux en direction de la surface de l'échantillon.

Lesdits premier système et deuxième système optiques peuvent être confondus et former alors un système optique commun.

Le système optique peut être déplacé de façon à ce que lors de l'acquisition du premier signal optique, le plan focal objet du système optique est situé en profondeur, dans l'échantillon, tandis que lors de l'acquisition de chaque deuxième signal optique, le plan focal objet du système optique est situé au niveau de la surface de l'échantillon.

Une fibre optique de détection peut être disposée dans ledit plan focal conjugué dudit plan focal objet dudit système optique commun, ladite fibre optique de détection étant apte à transmettre ledit premier signal otique vers le premier photodétecteur ou vers le deuxième photodétecteur.

Le premier photodétecteur et le deuxième photodétecteur peuvent former un même photodétecteur.

La première source de lumière et la deuxième source de lumière peuvent former une même source de lumière.

## Description des figures.

La figure 1 représente un dispositif de spectrométrie Raman confocale.

La figure 2 représente les étapes d'un procédé d'établissement d'une fonction de correction d'un spectre Raman.

La figure 3 représente l'évolution de l'intensité d'un signal Raman dans la bande spectrale 2870 cm$^{-1}$ - 3000 cm$^{-1}$ dans un milieu diffusant, en fonction de la profondeur.

La figure 4 représente la profondeur réelle du plan focal objet du système optique du dispositif en fonction de la profondeur apparente.

Les figures 5A à 5D représentent des exemples de correction de spectres Raman acquis à différentes profondeurs dans un milieu diffusant connu.

Les figures 6A à 6D représentent des exemples de correction de spectres Raman acquis à différentes profondeurs dans un milieu diffusant connu.

Les figures 7A et 7B représentent un premier exemple de dispositif bimodal, permettant de combiner une mesure par spectrométrie Raman et une mesure de réflectance diffuse.

La figure 8 représente une vue en coupe du dispositif similaire à celui représenté sur les figures 7A et 7B.

La figure 9 représente le parcours de la lumière dans un échantillon diffusant en fonction de la distance de rétrodiffusion.

La figure 10 représente les étapes d'un procédé de détermination des propriétés optiques d'un échantillon, pouvant être mises en œuvre à l'aide d'un dispositif selon l'invention.

La figure 11 est un exemple de table de calibration pouvant être utilisée dans le procédé de détermination des propriétés optiques d'un échantillon.

Les figure 12 et 13 sont un deuxième et un troisième exemple de dispositif de spectrométrie Raman confocal bimodal.

## Description détaillée

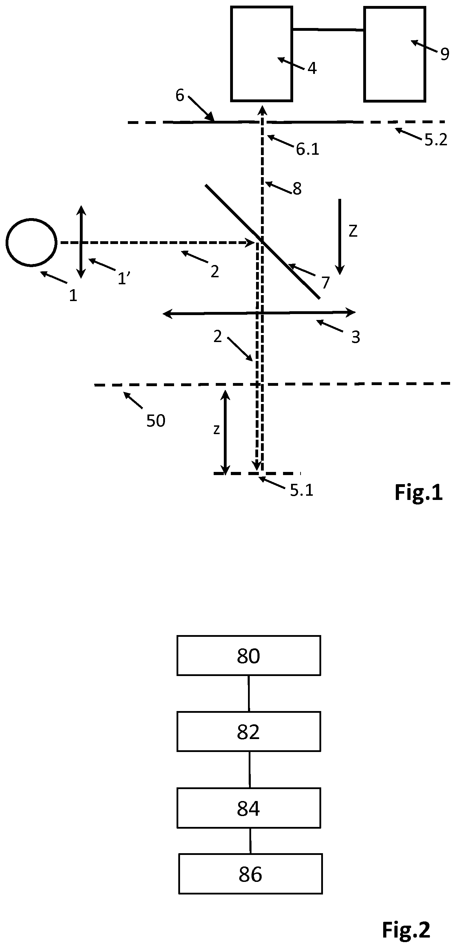

La figure 1 représente un exemple de dispositif de spectrométrie Raman confocale. Il comporte une première source de lumière monochromatique 1, typiquement une source Laser, par exemple centrée sur une longueur d'onde de 532 nm, apte à produire un premier faisceau laser 2 monochromatique vers la surface d'un échantillon analysé 50.

Le dispositif comporte également un premier système optique 3, apte à focaliser ledit faisceau laser 2 dans un plan focal objet 5.1, en particulier à l'intérieur de l'échantillon 50. Le premier système optique 3 présente un axe optique Z, s'étendant de préférence perpendiculairement à la surface de l'échantillon 50.

Le faisceau Laser est dirigé vers l'échantillon par une réflexion sur une lame semi-réfléchissante 7.

Le dispositif comporte également un filtre spatial, sous la forme d'un diaphragme 6, de type sténopé, dont l'ouverture 6.1 est disposée dans le plan focal image 5.2, conjugué dudit plan focal objet 5.1, ainsi qu'un premier photodétecteur, qui est ici un spectrophotomètre Raman 4, disposé en aval du diaphragme 6. Le terme aval s'entend dans le sens de propagation de la lumière. L'ouverture du sténopé est typiquement de quelques dizaines de $\mu$m, et de préférence inférieure à 500 $\mu$m. Elle est par exemple de 50 $\mu$m.

Sous l'effet de l'illumination par le faisceau laser 2, l'échantillon est apte à émettre un premier signal optique 8, ce dernier étant transmis, par la lame semi-réfléchissante 7, vers le spectrophotomètre 4. Le spectrophotomètre Raman 4 est apte à établir un premier signal mesuré SP, qui est, dans le cas présent, un spectre du premier signal optique 8 rétrodiffusé par l'échantillon, dans une plage fréquentielle généralement comprise entre quelques dizaines de cm$^{-1}$ et quelques milliers de cm$^{-1}$. Le spectre Raman a pour objectif d'identifier les fréquences de radiations issues de transitions énergétiques de molécules constituant l'échantillon suite à des diffusions inélastiques avec les photons constituant le faisceau incident.

Le dispositif comporte un microprocesseur 9, couplé au spectrophotomètre 4, et dont il reçoit des données d'entrée sous forme de spectres Raman. Le microprocesseur comporte une mémoire programmable, apte à stocker un algorithme de correction d'un spectre Raman décrit ci-après.

Du fait de la présence du sténopé 6 situé dans le plan focal 5.2, conjugué du plan focal objet 5.1, et disposé entre le premier système optique 3 et le spectrophotomètre 4, seuls les photons rétrodiffusés, provenant du plan focal objet, passent le sténopé et sont détectés par le spectromètre Raman, selon une configuration dite de détection confocale. Les photons rétrodiffusés, provenant de plans adjacents au plan focal objet 5.1, plus proches ou plus éloignés de la surface de l'échantillon, sont arrêtés et ne contribuent pas au spectre Raman formé par le spectrophotomètre.

Selon la résolution axiale du dispositif, les photons provenant du voisinage immédiat du plan focal objet 5.1, peuvent également être détectés. Le terme voisinage immédiat désigne une distance de quelques $\mu$m, de préférence inférieure à 5 $\mu$m, du plan focal objet 5.1.

En déplaçant le plan focal objet 5.1 dans l'échantillon, il est possible d'obtenir des spectres représentatifs d'une succession de « coupes optiques », correspondant au plan focal objet.

Ainsi, cette configuration, dite de spectroscopie Raman confocale, permet d'obtenir une information sur la nature des matériaux constituant l'échantillon dans des plans successifs, parallèles à la surface de l'échantillon, et s'étendant selon une profondeur z, dite profondeur de mesure, pouvant atteindre 100 $\mu$m à 200 $\mu$m, selon les propriétés d'absorption ou de diffusion de la lumière dans l'échantillon. Au-delà d'une profondeur z de 100 $\mu$m à 200 $\mu$m, le signal rétrodiffusé 8, porteur d'information, subit une extinction trop importante, du fait de l'absorption ou d'une diffusion réduisant trop fortement le signal traversant le sténopé. Cette perte en retour dépend de la position du plan focal objet 5.1 dans l'échantillon et l'information extraite du signal présente un biais.

Le système optique 3 est dans cet exemple un objectif 100X d'ouverture numérique 0,9, et de focale 1.7 mm.

Une lentille 1' peut être couplée à la source Laser, de façon à ajuster le diamètre du faisceau en amont du système optique 3. Cette lentille est optionnelle.

Cependant, le signal Raman rétrodiffusé par l'échantillon est d'intensité faible. De plus, il est atténué par la diffusion et l'absorption des photons dans la profondeur z de l'échantillon traversée, entre le plan focal objet 5.1 et la surface de l'échantillon.

La figure 2 représente les étapes d'un procédé pour déterminer une fonction de correction, notée $F_{corr}$, apte à corriger l'influence de la diffusion des photons dans cette profondeur z. Notons que le spectrophotomètre Raman étant placé dans une configuration confocale, la position de la partie analysée de l'échantillon est maîtrisée, puisqu'il s'agit de l'intersection du faisceau laser avec le plan focal objet 5.1. De ce fait, on connaît la distance traversée par la lumière dans l'échantillon avant et après l'échantillon, puisqu'il s'agit, dans les deux cas, de la profondeur z. Cette profondeur z est strictement supérieure à 0 $\mu$m et généralement inférieure à 100 $\mu$m ou 200 $\mu$m.

Pour déterminer cette fonction de correction, on a constitué des fantômes de calibration formé à partir d'un matériau diffusant, présentant des propriétés optiques, en particulier un coefficient de diffusion réduit et un indice de réfraction, proche de celui d'un tissu biologique. Ces fantômes ont été réalisés sur la base d'un matériau de type PDMS (Polydiméthylsiloxane), en ajoutant des particules de $TiO_2$, de façon à augmenter le coefficient de diffusion. Quatre fantômes ont été constitués, présentant un coefficient de diffusion réduit $\mu_s$'compris entre 21,2 cm$^{-1}$ et 55,6 cm$^{-1}$.

D'une façon générale, le procédé d'établissement de la fonction de correction consiste à :

- établir une pluralité de spectres, dits spectres de calibration $SP_{calib\text{-}z}$, en effectuant un balayage du plan focal objet 5.1 du système optique dans un fantôme, ou dans une pluralité de fantômes, dont les propriétés optiques sont proches de l'échantillon à analyser, entre la surface du fantôme (z = 0) et un plan situé à une profondeur z d'environ 200 $\mu$m,

- puis modéliser une fonction représentative de la décroissance de l'intensité du signal Raman, dans une ou plusieurs bandes spectrales prédéterminées, dites bandes spectrales d'intérêt.

Les bandes spectrales d'intérêt sont des bandes spectrales présentant des raies caractéristiques du matériau constituant les fantômes, en l'occurrence le PDMS, en particulier les bandes spectrales [680 cm$^{-1}$-720 cm$^{-1}$], [1380 cm$^{-1}$- 1440 cm$^{-1}$], [2870 cm$^{-1}$-3000 cm$^{-1}$].

La première étape 80 consiste à obtenir les spectres de calibration SP$_{calib-z}$ sur les fantômes précédemment décrits chaque spectre étant associé à une profondeur z donnée.

L'expérience montre qu'au-delà d'une certaine profondeur seuil z$_t$, l'intensité dans lesdites bandes spectrales d'intérêt n'évolue pratiquement plus et tend vers une valeur asymptotique. Cette profondeur seuil z$_t$ varie en fonction des propriétés d'absorption et de diffusion du matériau examiné et en fonction de la longueur d'onde du faisceau laser. Les inventeurs ont constaté que sur les fantômes utilisés, cette valeur asymptotique est obtenue au-delà d'une profondeur seuil z$_t$ = 150 μm. Au-delà de cette profondeur seuil, le spectre Raman n'évolue plus et tend vers un spectre Raman dit spectre Raman de profondeur, noté SP$_{depth}$ et tel que SP$_{depth}$ = SP$_{calib-z}$, avec z > z$_t$.

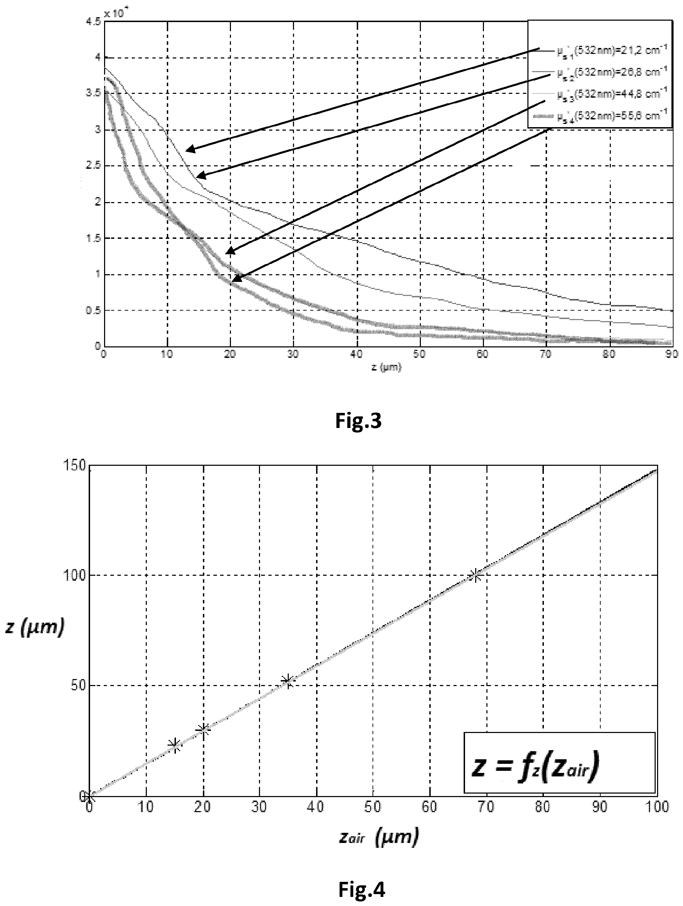

La figure 3 représente l'évolution de l'intensité dans la bande spectrale [2870 cm$^{-1}$-3000 cm$^{-1}$] en fonction de la profondeur z pour différents fantômes, dont le coefficient de diffusion varie de 21.2 cm$^{-1}$ à 55.6 cm$^{-1}$.

Une particularité de la configuration confocale précédemment décrite est qu'on déplace le plan focal objet 5.1 du système optique (3) à l'intérieur d'un milieu diffusant, dont l'indice de réfraction est différent de celui de l'air. Si l'échantillon était constitué d'air, la détermination de la profondeur z$_{air}$ du plan focal dans l'échantillon, dite profondeur apparente, serait aisément obtenu connaissant les paramètres du système optique (3). Cependant, du fait de l'indice de réfraction de l'échantillon, la profondeur réelle z du plan focal objet 5.1 est décalée par rapport à la profondeur apparente, dans l'air, z$_{air}$. Afin de tenir compte de ce décalage, une fonction de recalage f$_z$(z) est déterminée, ce qui fait l'objet de l'étape 82.

Cette étape 82 vise à déterminer la profondeur apparente z$_{air}$ lorsque la profondeur réelle z du plan focal objet 5.1 dans l'échantillon est connue. Elle peut être réalisée par modélisation ou de façon expérimentale. Une méthode expérimentale est d'utiliser des fantômes composites comportant :

- une couche supérieure, dont l'indice de réfraction est représentatif de l'échantillon à examiner, cette couche étant par exemple formée par du PDMS. Selon les fantômes, l'épaisseur de la couche supérieure est comprise entre 20 μm et 100 μm.

- une couche inférieure, formé par un matériau de référence dont la signature Raman est connue. Dans cet exemple, la couche inférieure est formée par une lame de Silicium d'épaisseur 500 μm, le Silicium présentant une raie Raman caractéristique à 521 cm$^{-1}$.

Chaque fantôme composite fait l'objet d'un balayage progressif, en déplaçant le plan focal objet 5.1 du système optique 3 de la couche supérieure vers la couche inférieure. Lorsque le plan focal atteint la couche inférieure, l'intensité de la raie 521 cm$^{-1}$ passe par un maximum. La profondeur réelle du plan focal, par rapport à la surface de la couche supérieure, est alors connue puisqu'elle correspond à l'épaisseur de la couche supérieure, tandis que la profondeur apparente z$_{air}$ est connue car elle dépend des paramètres optiques du système optique 3. On effectue alors une correspondance entre la profondeur apparente z$_{air}$ et la profondeur réelle z du plan focal objet 5.1 dans l'échantillon.

En utilisant des fantômes composites dont l'épaisseur de la couche supérieure varie entre 20 μm et 100 μm, on établit la fonction de recalage f$_z$, permettant d'effectuer un recalage entre la profondeur apparente z$_{air}$ et la profondeur réelle z.

La figure 4 montre les résultats d'une courbe de calibration expérimentale, la profondeur réelle z étant représentée en fonction de la profondeur apparente z$_{air}$, sur la base de laquelle on peut établir une fonction de recalage en profondeur f$_z$, telle que

$$z = f_z(z_{air}) \approx 1{,}48 \times z_{air}$$

L'étape 84 consiste à déterminer un terme de correction β prenant en compte une ou plusieurs propriétés optiques de l'échantillon. Les inventeurs ont considéré que la décroissance de l'intensité mesurée en fonction de la profondeur z prenait la forme d'une fonction exponentielle décroissante de type e$^{-\beta z}$, le terme β étant un terme de correction dépendant du coefficient de diffusion réduit d'un échantillon. Dans cet exemple, on ne considère que le coefficient de diffusion réduit μ$_s$' à la longueur d'onde du faisceau Laser, soit λ = 532 nm$^{-1}$. En effet, les inventeurs ont considéré que les longueurs d'onde du faisceau rétrodiffusé ne s'écartaient pas suffisamment de cette longueur d'onde laser pour justifier la prise en compte de la valeur du coefficient de diffusion réduit à d'autres longueurs d'onde.

Sur la base des acquisitions réalisées lors de l'étape 80, il s'agit de modéliser la décroissance de l'intensité sur plusieurs bandes spectrales d'intérêt du spectre.

Les inventeurs ont établi que, dans les trois bandes spectrales d'intérêt précédemment définies, l'évolution de l'intensité, en fonction de la profondeur z, suit la loi :

$$I(z)= (I_{surface} - I_{depth})\, e^{-\beta \times z}+ I_{depth} \quad (1)$$

où I(z), Surface et $I_{deph}$ désignent respectivement les intensités mesurées, sur une bande spectrale d'intérêt, à partir des spectres $SP_{calib-z}$, $SP_{surface}$, (ou $SP_{calib-z=0}$), $SP_{depth}$ (ou $SP_{calib-z>zt}$).

Par intensité dans une bande spectrale, on entend une valeur représentative de l'intégrale dans ladite bande spectrale.

L'utilisation de fantômes de calibration, dont le coefficient de diffusion réduit $\mu_s$' varie entre 21.2 cm$^{-1}$ et 55.6 cm$^{-1}$ permet de compléter cette loi empirique par la relation suivante, exprimant la dépendance entre le terme de correction $\beta$ et le coefficient de diffusion réduit $\mu_s$' à 532 nm :

$$\beta\,(\mu'_s)= 0{,}0034 + 8{,}12\ 10^{-4} \times \mu_s'\ (2)$$

Ainsi, en première approximation, le terme de correction peut être approximé par

$$\beta\,(\mu'_s) \approx 1.10^{-3} \times \mu_s'\,(2')$$

La combinaison des expressions (1) et (2) (ou (2')) permet établir un modèle décrivant l'évolution de l'intensité des bandes spectrales d'intérêt en fonction de la profondeur z examinée et de la diffusion de la lumière dans l'échantillon. C'est l'objet de l'étape 86.

En généralisant ce modèle à l'ensemble des bandes spectrales du spectre, les inventeurs ont déterminé une fonction de correction $F_{corr}$ d'un spectre Raman SPz acquis à une profondeur z, de façon à obtenir un spectre Raman corrigé $SP_{corr-z}$, ou premier signal corrigé, tel que

$$SP_{corr-z} = F_{corr}(SP_z) = [SP_z - SP_{depth}]e^{\beta(\mu'_s)\times z} + SP_{depth} \quad (3)$$

où :

- $SP_z$ désigne un spectre mesuré à la profondeur z (c'est-à-dire à une distance z sous la surface de l'échantillon),
- $SP_{depth}$ désigne un spectre mesuré à une profondeur supérieure à une profondeur seuil $z_t$ sous la surface de l'échantillon,
- $\beta(\mu_s')$ désigne la valeur du terme de correction $\beta$ en fonction du coefficient de diffusion réduit $\mu_s$', à la longueur d'onde du faisceau laser incident, de l'échantillon examiné, la valeur de $\beta(\mu_s')$ étant déterminée selon l'expression (2) ou (2').

La profondeur seuil $z_t$ est de préférence déterminée expérimentalement, sur l'échantillon analysé, en effectuant une pluralité de mesures de spectres à différentes profondeurs z, et en identifiant une profondeur $z_t$ à partir de laquelle le spectre mesuré n'évolue plus de façon significative, dans une ou plusieurs bandes d'intérêt prédéterminées. En effet, cette profondeur seuil varie en fonction de la longueur d'onde et des propriétés optique (absorption, diffusion) de l'échantillon.

Alternativement, la profondeur seuil $z_t$ peut être déterminée sur des fantômes de calibration mimant les propriétés optiques de l'échantillon à caractériser.

Naturellement, l'expression (3) s'applique à l'intensité $I_z$ de toute bande spectrale d'un spectre $SP_z$, cette intensité pouvant être corrigée selon l'expression

$$I_{corr-z} = F_{corr}(I) = [I_z - I_{depth}]e^{\beta(\mu'_s)\times z} + I_{depth} \quad (5),$$

où

- $I_z$ désigne l'intensité d'une bande spectrale d'un spectre mesuré à la profondeur z (c'est-à-dire à une distance z sous la surface de l'échantillon),
- $I_{depth}$ désigne l'intensité de ladite bande spectrale d'un spectre mesuré à une profondeur supérieure à une profondeur seuil $z_t$ sous la surface de l'échantillon.
- $\beta(\mu_s')$ désigne la valeur du terme de correction $\beta$ en fonction du coefficient de diffusion réduit $\mu_s'$, , à la longueur d'onde du faisceau laser incident, de l'échantillon examiné, $\beta(\mu_s')$ étant déterminée selon l'expression (2) ou (2').

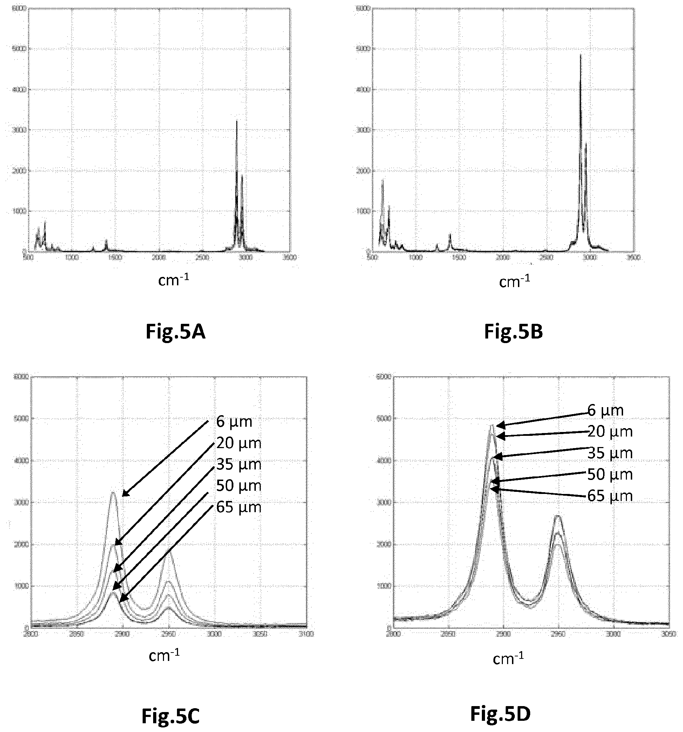

La figure 5A représente un spectre Raman mesuré sur un fantôme diffusant de PDMS, d'épaisseur 100 $\mu$m, et dont le coefficient de diffusion réduit, à 532 nm, est égal à 26,8 cm$^{-1}$, pour une profondeur de 6 $\mu$m. La figure 5B représente un spectre Raman corrigé en appliquant la fonction de correction explicitée ci-dessus. On voit que les pics sont corrigés de façon efficace.

Les figures 5C et 5D représentent un zoom de spectres respectivement non corrigés et corrigés sur une bande spectrale s'étendant entre 2800 et 3050 cm$^{-1}$. En partant du pic le plus intense vers le pic le moins intense, les profondeurs considérées sont respectivement 6 $\mu$m, 20 $\mu$m, 35 $\mu$m, 50 $\mu$m et 65 $\mu$m. La comparaison entre les figures 5C et 5D atteste de la qualité de la correction.

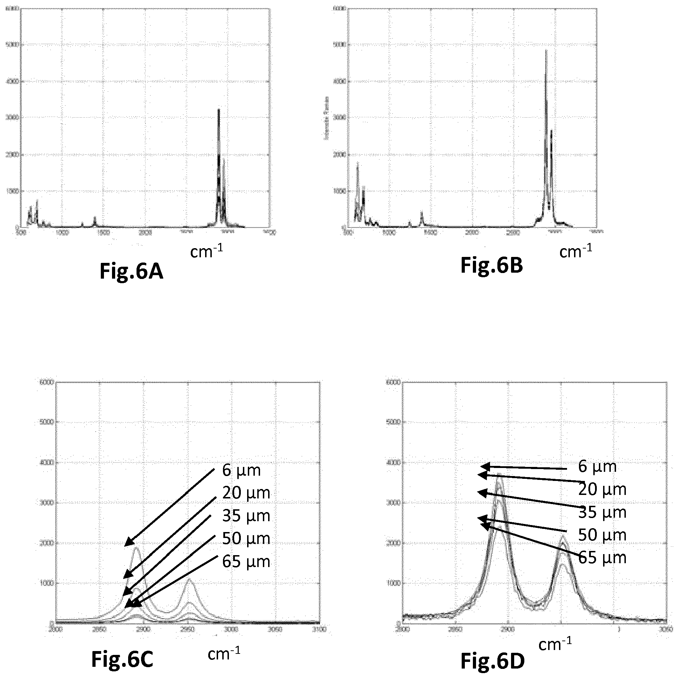

La figure 6A représente un spectre Raman mesuré sur un fantôme diffusant de PDMS, d'épaisseur 100 $\mu$m, et dont le coefficient de diffusion réduit, à 532 nm, est égal à 55,6 cm$^{-1}$, pour une profondeur de 6 $\mu$m. La figure 6B représente un spectre Raman corrigé en appliquant la fonction de correction explicitée ci-dessus. On voit que les pics sont corrigés de façon efficace.

Les figures 6C et 6D représentent un zoom de spectres respectivement non corrigés et corrigés sur une bande spectrale s'étendant entre 2800 et 3050 cm$^{-1}$. En partant du pic le plus intense vers le pic le moins intense, les profondeurs considérées sont respectivement 6 $\mu$m, 20 $\mu$m, 35 $\mu$m, 50 $\mu$m et 65 $\mu$m. La comparaison entre les figures 6C et 6D atteste de la qualité de la correction.

Un des éléments importants de la correction est la connaissance des propriétés optiques de diffusion dans le milieu, en particulier un coefficient décrivant la diffusion de la lumière dans le milieu, tel que le coefficient de diffusion réduit $\mu_s'$, le coefficient de diffusion $\mu_s$ ou le facteur d'anisotropie de la diffusion g.

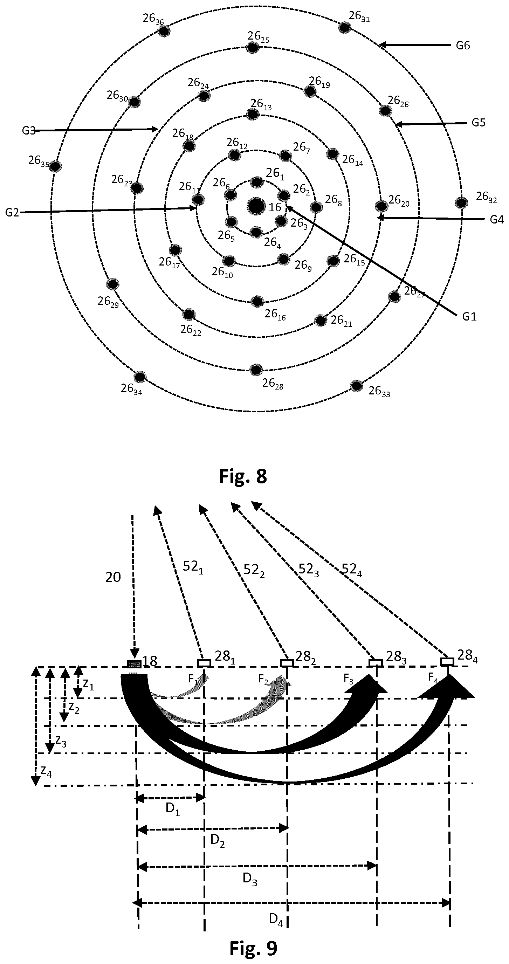

En lien avec la figure 9, de telles propriétés optiques peuvent être déterminées en dirigeant un deuxième faisceau de lumière 20 collimaté à la surface de l'échantillon, de manière à former, à la surface de l'échantillon, une zone élémentaire d'illumination 18, formée par l'intersection dudit deuxième faisceau lumineux avec la surface de l'échantillon. En analysant un signal optique rétrodiffusé ($S_1$, $S_2$, $S_3$, $S_4$), dit deuxième signal optique, émanant de la surface de l'échantillon à une ou plusieurs distances, (D1, D2, D3, D4) dites distances de rétrodiffusion, de la zone élémentaire d'illumination 18, on peut déterminer les propriétés optiques de l'échantillon.

Les inventeurs ont conçu un dispositif bimodal, combinant deux modalités d'analyse :

- Une première modalité, visant à réaliser une première analyse de l'échantillon, à partir d'un premier signal optique 8 rétrodiffusé par l'échantillon, à l'aide d'un premier photodétecteur placé en configuration confocale. Ce premier signal optique 8 peut être un signal portant une information de type Raman ou un signal de fluorescence, l'objectif étant alors d'établir une information quant à la constitution de l'échantillon : détermination de la nature chimique de constituants (spectrométrie Raman) ou présence d'un fluorophore (mesure de fluorescence).

- Une deuxième modalité, visant à déterminer les propriétés optiques de l'échantillon, par mesure d'un deuxième signal optique 52 rétrodiffusé, selon les principes rappelés dans le paragraphe précédent.

Les résultats obtenus à l'aide de la deuxième modalité peuvent avantageusement être utilisés pour corriger le premier signal acquis au cours de la première modalité, de façon à accroître la précision de l'analyse.

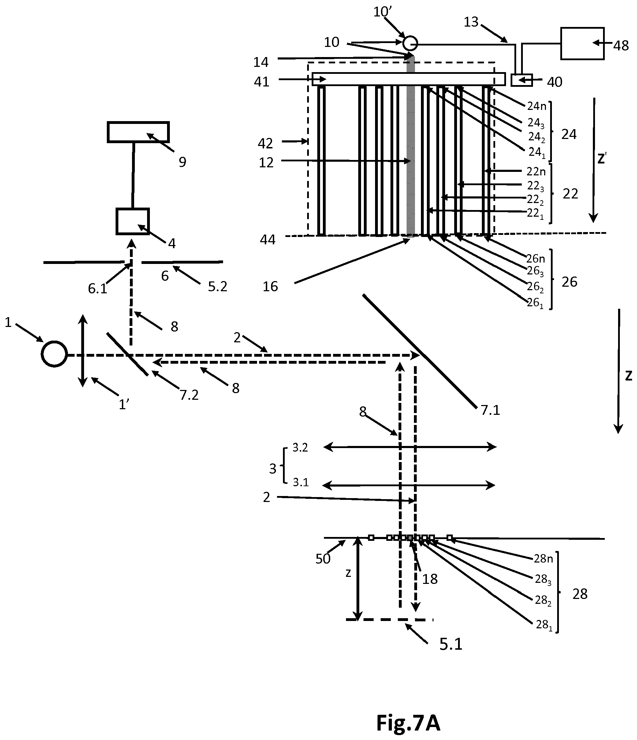

Selon un mode de réalisation, représenté sur la figure 7A, le dispositif bimodal, comporte une voie de mesure par spectrométrie Raman (1$^{ère}$ modalité), présentant les caractéristiques décrites en lien avec la figure 1, et comportant également une voie de mesure permettant la détermination des propriétés optique de l'échantillon (2$^{ième}$ modalité).

On retrouve les mêmes éléments que ceux décrits en lien avec la figure 1, à savoir une source de rayonnement laser 1, couplée à un système optique 3, apte à focaliser un premier faisceau optique 2, en l'occurrence un faisceau laser, produit par la source 1 dans le plan focal objet 5.1 du système optique 3, ledit plan focal objet 5.1 étant situé à une profondeur z en dessous de la surface de l'échantillon 50.

Le faisceau laser 2 est transmis par une première lame semi-réfléchissante 7.1, puis est réfléchi en direction de l'échantillon par une deuxième lame semi-réfléchissante 7.2.

Le système optique comporte ici d'un objectif de microscope 3.1, couplé à une lentille 3.2.

En réponse à ce faisceau, la partie de l'échantillon se trouvant au voisinage de l'intersection du faisceau 2 avec le plan focal objet 5.1 émet un premier signal optique 8, apte à être collecté par le spectromètre Raman placé selon une configuration confocale, du fait de la présence du diaphragme 6, dont l'ouverture 6.1, formant un sténopé, est disposée dans le plan focal image 5.2 conjugué du plan focal objet 5.1. A noter que le diaphragme 6 peut être remplacé par une fibre optique, dont une extrémité distale, apte à collecter le signal optique 8, est placée dans le plan focal image 5.2, l'extrémité proximale de ladite fibre assurant alors le transfert du signal optique vers le spectromètre Raman 4. Dans ce cas, l'extrémité distale de la fibre optique se comporte de façon équivalente au diaphragme 6 et forme un filtre spatial comportant une fenêtre, en l'occurrence l'extrémité distale de la fibre, apte à transmettre le signal optique 8 vers le photodétecteur 4.

Le microprocesseur 9, couplé au spectromètre Raman 4, assure le traitement des spectres Raman SPz mesurés lorsque le plan focal objet 5.1 est placé à une profondeur z sous la surface de l'échantillon et en particulier leur correction selon le procédé précédemment décrit.

Par ailleurs, le dispositif représenté sur la figure 7A comporte une voie de mesure apte à caractériser les propriétés optiques de l'échantillon.

Ainsi, le dispositif comporte une deuxième source de lumière 10, qui comprend dans cet exemple une source de lumière blanche 10'.

La deuxième source de lumière 10 comprend, dans ce mode de réalisation, une fibre optique d'illumination 12, s'étendant entre une extrémité proximale 14 et une extrémité distale 16. La fibre optique d'illumination 12 est apte à collecter la lumière, par une extrémité proximale 14 et à émettre un faisceau lumineux 20 par une extrémité distale 16, ledit faisceau lumineux étant alors dirigé vers la surface d'un échantillon 50. Dans une telle configuration, la source de lumière 10 est dite fibrée.

Le diamètre de la fibre optique d'émission 12 est compris entre 100 $\mu$m et 1 mm, et est par exemple égal à 400 $\mu$m.

Par source ponctuelle, on entend une source dont l'aire est inférieure à 1 cm$^2$, et de préférence inférieure à 5 mm$^2$, et encore de préférence inférieure à 1 mm$^2$.

Le dispositif comporte également une pluralité de fibres optiques de détection $22_1$, $22_2$, $22_3$...$22_n$, l'indice n étant compris entre 1 et N, N désignant le nombre de fibres optiques de détection dans le dispositif. N est un entier naturel compris généralement compris entre 1 et 100, et préférentiellement compris entre 5 et 50. Chaque fibre de détection $22_1$, $22_2$, $22_3$...$22_n$ s'étend entre une extrémité proximale $24_1$, $24_2$, $24_3$...$24_n$ et une extrémité distale $26_1$, $26_2$, $26_3$...$26_n$.

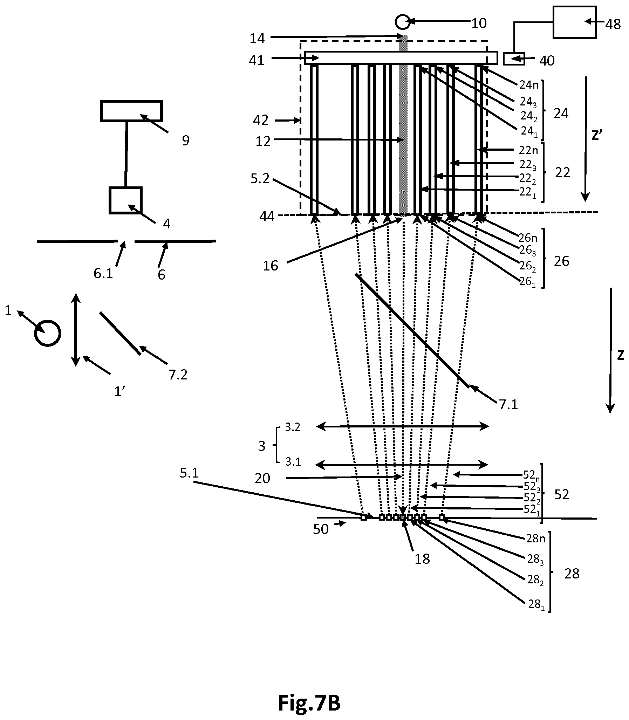

Sur les figures 7A et 7B, les références 22, 24 et 26 désignent respectivement l'ensemble des fibres de détection, l'ensemble des extrémités proximales des fibres de détection et l'ensemble des extrémités distales des fibres de détection.

Le diamètre de chaque fibre optique de détection 22 est compris entre 50 $\mu$m et 1 mm, et est par exemple égal à 300 $\mu$m.

L'extrémité proximale 24 de chaque fibre optique de détection 22 est apte à être optiquement couplée à un deuxième photodétecteur 40.

La figure 7B représente le fonctionnement du dispositif selon la modalité de détermination des propriétés optiques de l'échantillon.

L'extrémité distale $26_1$, $26_2$, $26_3$...$26_n$ de chaque fibre optique de détection 22 est apte à collecter respectivement un deuxième signal optique $52_1$, $52_2$, $52_3$...$52_n$ rétrodiffusé par l'échantillon 50, lorsque ce dernier est exposé au faisceau lumineux 20, ledit signal optique étant transmis par la lame semi-réfléchissante 7.1.

Le photodétecteur 40 est apte à détecter chaque deuxième signal optique $52_1$, $52_2$, $52_3$...$52_n$ de façon à former un signal $S_1$,$S_2$, $S_3$, ...$S_n$, dit deuxième signal mesuré, respectivement représentatif de chaque deuxième signal optique détecté.

Il peut s'agir d'un spectrophotomètre, apte à établir le spectre en longueur d'onde du signal optique collecté par la fibre optique de détection 22 auquel il est couplé.

Les fibres optiques de détection 22 s'étendent parallèlement à un axe longitudinal Z', autour de la fibre optique d'émission 12. Elles sont maintenues fixes les unes par rapport aux autres par un élément de maintien 42. Leurs extrémités distales 26 sont coplanaires, et définissent un plan de détection 44.

Une fibre optique 13, dite fibre de retour d'excitation, relie la deuxième source de lumière 10 au deuxième photodétecteur 4. Cette fibre optique est utile pour réaliser une mesure de calibration détaillée ultérieurement. Cette fibre optique de retour d'excitation n'est pas représentée sur les figures suivantes, mais peut être présente sur l'ensemble des modes de réalisation.

La figure 8 représente une vue en coupe du dispositif, dans le plan de détection 44, formé par l'ensemble des extrémités distales 26 des N fibres de détection. Dans cet exemple, N est égal à 36. Comme on peut le voir, les fibres optiques de détection sont réparties selon :

- un premier groupe $G_1$ de six fibres optiques de détection $22_1$...$22_6$, disposées régulièrement le long d'un cercle centré sur la fibre optique d'émission 12, de telle sorte que l'extrémité distale $26_1$...$26_6$ de chaque fibre de ce groupe soit distante de l'extrémité distale 16 de la fibre optique d'émission 12 d'une première distance $d_1$ égale à 300 $\mu$m.

- un deuxième groupe $G_2$ de six fibres optiques de détection $22_7...22_{12}$, disposées régulièrement le long d'un cercle centré sur la fibre optique d'émission 12, de telle sorte que l'extrémité distale $26_7...26_{12}$ de chaque fibre de ce groupe soit distante de l'extrémité distale 16 de la fibre optique d'émission 12 d'une deuxième distance $d_2$ égale à 700 $\mu$m.

- un troisième groupe $G_3$ de six fibres optiques de détection $22_{13}...22_{18}$, disposées régulièrement le long d'un cercle centré sur la fibre optique d'émission 12, de telle sorte que l'extrémité distale $26_{13}...26_{18}$ de chaque fibre de ce groupe soit distante de l'extrémité distale 16 de la fibre optique d'émission 12 d'une troisième distance $d_3$ égale à 1,1 mm.

- un quatrième groupe $G_4$ de six fibres optiques de détection $22_{19}...22_{24}$, disposées régulièrement le long d'un cercle centré sur la fibre optique d'émission 12, de telle sorte que l'extrémité distale $26_{19}...26_{24}$ de chaque fibre de ce groupe soit distante de l'extrémité distale 16 de la fibre optique d'émission 12 d'une quatrième distance $d_4$ égale à 1,5 mm.

- un cinquième groupe $G_5$ de six fibres optiques de détection $22_{25}...22_{30}$, disposées régulièrement le long d'un cercle centré sur la fibre optique d'émission 12, de telle sorte que l'extrémité distale $26_{25}...26_{30}$ de chaque fibre de ce groupe soit distante de l'extrémité distale 16 de la fibre optique d'émission 12 d'une cinquième distance $d_5$ égale à 2 mm.

- un sixième groupe $G_6$ de six fibres optiques de détection $22_{31}...22_{36}$, disposées régulièrement le long d'un cercle centré sur la fibre optique d'émission 12, de telle sorte que l'extrémité distale $26_{31}...26_{35}$ de chaque fibre de ce groupe soit distante de l'extrémité distale 16 de la fibre optique d'émission 12 d'une sixième distance $d_6$ égale à 2,5 $\mu$m.

Lorsqu'on évoque une distance entre deux fibres, ou entre une fibre ou un faisceau lumineux, on entend une distance centre à centre.

Ainsi, chaque extrémité distale 26n d'une fibre optique de détection 22n est placée, dans un plan perpendiculaire à l'axe longitudinal Z' selon lequel s'étendent ces fibres, à une distance $d_n$ de la deuxième source de lumière 10 (c'est-à-dire de l'extrémité distale 16 de la fibre d'émission 12), et, par conséquent, à une distance $d_n$ du faisceau lumineux 20 dirigé vers l'échantillon 50.

Le dispositif peut comporter un deuxième photodétecteur 40, apte à être couplé à l'extrémité proximale 24n de chaque fibre optique de détection 22n. Dans cet exemple, le deuxième photodétecteur est un spectrophotomètre, apte à déterminer le spectre d'un deuxième signal optique $52_1...52_n$ rétrodiffusé par l'échantillon lorsque ce dernier est exposé au deuxième faisceau lumineux 20. Pour cela, les extrémités proximales 24 de chaque groupe de fibres optiques de détection, décrits ci-dessus, sont regroupées et sont, groupe par groupe, successivement couplées au deuxième photodétecteur 40 au moyen d'un commutateur optique 41.

Ainsi, le deuxième photodétecteur permet de mesurer un deuxième du rayonnement rétrodiffusé 52 par l'échantillon, sous l'effet d'une illumination par le deuxième faisceau lumineux 20.

Le deuxième photodétecteur 40 est apte à être connecté à un deuxième microprocesseur 48, ce dernier étant configuré pour mettre en œuvre le procédé pour déterminer une propriété optique de l'échantillon. Alternativement, le dispositif ne comporte qu'un seul microprocesseur 9, apte à être couplé au premier photodétecteur 4 et au deuxième photodétecteur 40. Dans ce cas, le microprocesseur 9 effectue les opérations de correction du spectre Raman et de détermination des propriétés optiques.

Le système optique 3 présente un facteur de grandissement G et un axe optique Z. Dans cet exemple, l'axe optique Z est confondu avec l'axe longitudinal Z' selon lequel s'étendent les fibres optiques de détection, ce qui constitue une configuration préférée. Dans cet exemple, le système optique 3 comporte:

- un objectif de microscope 3.1, placé en configuration foyer infini, apte à produire une image à l'infini de la surface de l'échantillon observé, lorsque ce dernier est placé au foyer de cet objectif. Dans cet exemple, il s'agit d'un objectif 100X, de distance focale $f_1$= 1.7 mm,
- un doublet achromat 3.2, de distance focale $f_2$ = 50 mm, apte à projeter l'image fournie par ce dernier dans le plan de détection 44, ce plan étant placé à la distance focale du doublet.

Le système optique 3 décrit ci-dessus présente un facteur de grandissement G égal au rapport des distances focales, soit $G \approx 30$. De préférence, le facteur de grandissement G est supérieur à 2, voire supérieur à 3 ou 5.

De préférence, le système optique 3 est amovible et interchangeable, ce qui permet, en utilisant le même dispositif, l'utilisation de systèmes optiques présentant des facteurs de grandissements différents.

Dans la première modalité, visant à établir un spectre Raman, le plan focal objet 5.1 du système optique 3 est situé dans l'échantillon, à une profondeur z de la surface de l'échantillon.

Dans cette deuxième modalité, visant à établir les propriétés optiques de l'échantillon, le plan focal objet 5.1 du système optique est confondu avec la surface de l'échantillon. Il permet alors de former une image de la surface de l'échantillon 50 sur le plan de détection 44 formé par les extrémités distales 26 de chaque fibre optique de détection 22, avec un facteur de grandissement G donné. Ainsi, chaque extrémité distale $26_1$, $26_2$...$26_n$ est respectivement conjuguée à une zone élémentaire de détection $28_1$, $28_2$...$28_n$ de la surface de l'échantillon. De cette façon, chaque fibre optique de détection $22_1$, $22_2$,...$22_n$ est apte à collecter respectivement un deuxième signal optique élémentaire $52_1$, $52_2$,...$52_n$ rétrodiffusé par l'échantillon, chaque signal optique élémentaire $52_1$, $52_2$,...$52_n$ émanant respectivement de la zone élémentaire de détection $28_1$, $28_2$...$28_n$. Chaque zone élémentaire de détection est de préférence distincte de la zone élémentaire de détection, et est séparée de cette dernière d'une distance non nulle.

De même, l'extrémité distale 16 de la fibre d'émission 12 est conjuguée à une zone élémentaire d'illumination 18 à la surface de l'échantillon, cette zone élémentaire d'illumination constituant le point d'impact du faisceau lumineux 20 à la surface de l'échantillon 50.

Ainsi, quel que soit le mode de réalisation, chacune desdites extrémités distales $26_1$, $26_2$...$26_n$ peut être située dans un plan focal image du système optique 3, et conjuguée à une zone élémentaire de détection $28_1$, $28_2$...$28_n$ située dans le plan focal objet dudit système optique, à la surface de l'échantillon.

De même, l'extrémité distale 16 de la fibre d'émission 12 est conjuguée à une zone élémentaire d'illumination 18 à la surface de l'échantillon, cette zone élémentaire d'illumination constituant le point d'impact du deuxième faisceau lumineux 20 à la surface de l'échantillon 50.

D'une façon générale, et quelle que soit le mode de réalisation, le terme zone élémentaire désigne une partie de la surface de l'échantillon dont les dimensions sont suffisamment faibles pour considérer qu'elle est traversée par un rayonnement lumineux homogène. Autrement dit, une zone élémentaire est une zone de forme délimitée, de préférence ponctuelle, c'est-à-dire dont le diamètre ou la diagonale est inférieure à 5 mm, et de préférence inférieure à 1 mm, voire inférieure à 500 $\mu$m.

Une zone élémentaire d'illumination 18 est traversée par le faisceau lumineux 20, se propageant en direction de l'échantillon 50, tandis qu'une zone élémentaire de détection 28n est traversée par un rayonnement rétrodiffusé 52n, ce rayonnement étant produit par la rétrodiffusion, dans l'échantillon, du faisceau lumineux 20. Le couplage optique, réalisé par le système optique 3, permet à chaque fibre de détection 22n de collecter le rayonnement rétrodiffusé élémentaire 52n, ce dernier correspondant au rayonnement rétrodiffusé traversant la zone élémentaire 28n.

L'élément de maintien 42 peut assurer une liaison rigide entre les fibres optiques de détection 22 et le système optique 3, de façon à maintenir le plan de détection 44, formé par les extrémités distales 26 des fibres optiques de détection à une distance fixe du système optique 3.

Si $d_n$ représente la distance entre l'extrémité distale 26n d'une fibre de détection 22n et l'extrémité distale 16 de la fibre d'émission 12, distance calculée dans un plan perpendiculaire à l'axe optique Z, la distance $D_n$ entre la zone élémentaire de détection 28n, conjuguée de ladite extrémité distale 26n, et la zone élémentaire d'illumination 18, conjuguée de ladite extrémité distale 16, est telle que :

$$Dn = \frac{dn}{G}$$

La distance $D_n$ est appelée distance de rétrodiffusion, car elle correspond à la distance, dans un plan perpendiculaire à l'axe optique Z, entre la zone élémentaire d'illumination 18 et une zone élémentaire de détection 28n de laquelle émane le signal rétrodiffusé Sn.

Si la distance entre le faisceau lumineux et l'extrémité distale d'une fibre optique de détection est, en amont du système optique, égale à une première distance, la distance de rétrodiffusion est, à la surface de l'échantillon, égale à ladite première distance pondérée par l'inverse du facteur de grandissement.

Lorsque son facteur de grandissement est supérieur à 1, le système optique 3 tend à rapprocher significativement les zones élémentaires de détection 28n de la zone élémentaire d'illumination 18. Le terme « en amont » se comprend en considérant la direction de propagation de la lumière.

Lorsque le facteur de grandissement G est inférieur à 1, le système optique tend au contraire à éloigner significativement les zones élémentaires de détection 28n de la zone élémentaire d'illumination 18 par rapport à la configuration de l'art antérieur.

Ainsi, selon la valeur du facteur de grandissement, les zones élémentaires de détection 28n sont :

- soit rapprochées les unes des autres, et rapprochées de la zone élémentaire d'illumination, leur surface étant également diminuée du carré du facteur de grandissement, par rapport à la surface de l'extrémité distale à laquelle elles sont respectivement associées. Cela permet d'effectuer une caractérisation de l'échantillon avec une résolution spatiale élevée, sur une profondeur plus faible que selon l'art antérieur.

- soit éloignées les unes des autres, et éloignées de la zone élémentaire d'illumination, leur surface étant augmentée du carré du facteur de grandissement, par rapport à la surface de l'extrémité distale à laquelle elles sont respectivement associées. Cela permet d'effectuer une caractérisation de l'échantillon avec une résolution spatiale plus faible.

La figure 9 résume cet effet technique, chaque flèche $F_1$, $F_2$, $F_3$ et $F_4$ représentant le trajet, dans l'échantillon 50, des photons contribuant aux signaux rétrodiffusés respectifs $52_1$, $52_2$, $52_3$, $52_4$ respectivement associés aux zones élémentaires de détection $28_1$, $28_2$, $28_3$, $28_4$. Plus l'écartement entre les zones élémentaires de détection $28_1$, $28_2$, $28_3$, $28_4$ et la zone élémentaire d'illumination 18 est élevée, plus la profondeur examinée $z_1$, $z_2$, $z_3$, $z_4$ de l'échantillon est importante. Inversement, plus l'écartement entre les zones élémentaires de détection et la zone élémentaire d'illumination est faible plus la profondeur examinée de l'échantillon est faible.

Dans le cas présent, le dispositif est mis en œuvre pour déterminer les propriétés optiques de l'échantillon, en particulier dans une couche superficielle, s'étendant entre la surface de l'échantillon et une profondeur maximale d'environ 100 $\mu$m à 150 $\mu$m, de façon à utiliser lesdites propriétés optiques pour effectuer une correction d'un spectre Raman confocal.

Aussi, on utilise de préférence un système optique 3, dont le facteur de grandissement est supérieur à 1, et de préférence supérieur à 5 ou 10, pour pouvoir déterminer une propriété optique représentative de cette couche superficielle.

Lorsque le deuxième photodétecteur est un spectromètre, le dispositif permet d'effectuer des mesures du spectre rétrodiffusé selon des distances de rétrodiffusion de quelques dizaines à environ 200 $\mu$m. On parle de spectroscopie de microreflectance diffuse.

On décrit à présent un procédé susceptible d'être mis en œuvre par le dispositif précédemment décrit, afin d'estimer une ou plusieurs propriétés optiques de l'échantillon examiné, et plus particulièrement d'une couche superficielle de cet échantillon, cette couche s'étendant en particulier entre la surface et une profondeur généralement inférieure à 150 $\mu$m.

Le terme propriété optique désigne notamment un facteur gouvernant l'absorption et la diffusion des photons dans le milieu diffusant, en particulier un coefficient d'absorption, un coefficient de diffusion, un coefficient de diffusion réduit, un coefficient d'anisotropie de la diffusion,

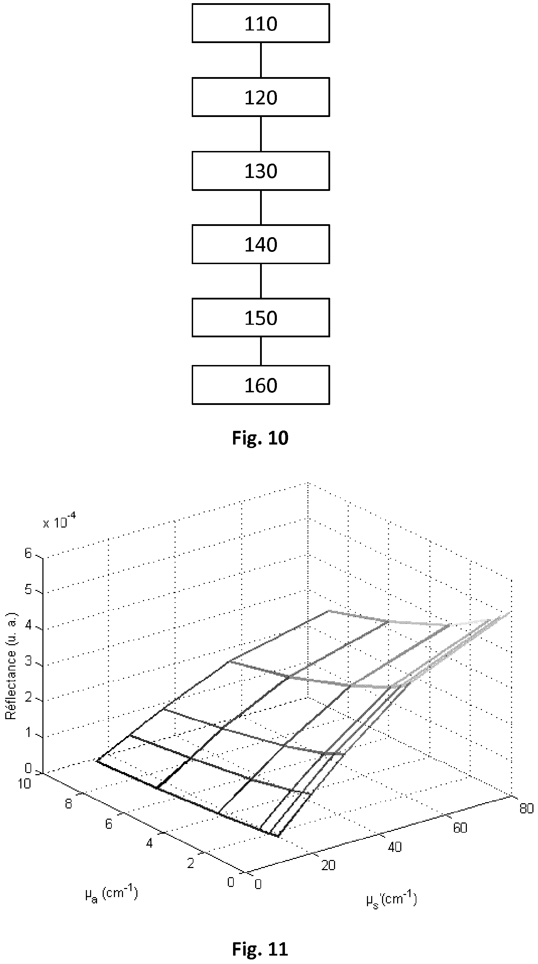

En lien avec la figure 10, on décrit les principales étapes d'un procédé permettant l'estimation des propriétés optiques de diffusion, en particulier le coefficient d'absorption $\mu_3$ et le coefficient de diffusion réduit $\mu'_s$. Dans cet exemple, le facteur de grandissement G s'élève à 30. Comme représenté sur la figure 8, le dispositif comporte 36 fibres de détection, divisées en 6 groupes de 6 fibres, en fonction de la distance $d_n$ séparant chaque fibre de détection 22n du faisceau d'illumination 50. Ces distances $d_n$ s'élèvent respectivement à 300 $\mu$m ; 700 $\mu$m ; 1.1 mm ; 1.5 mm ; 2 mm ; 2.5 mm

Grâce au système optique 3, chaque fibre de détection 22n est conjuguée à une zone élémentaire de détection 28n. Les zones élémentaires de détection sont alors elles-mêmes divisées en 7 groupes, en fonction de la distance de rétrodiffusion $D_n$ séparant chaque zone élémentaire de détection 28n à la zone élémentaire d'illumination 18. Compte tenu du facteur de grandissement, du système optique 3, les distances $D_n$ s'élèvent respectivement à environ 10 $\mu$m ; 23 $\mu$m ; 37 $\mu$m ; 50 $\mu$m ; 67 $\mu$m ; 83 $\mu$m.

On procède alors selon les étapes suivantes :

1$^{ère}$ étape 110 : application du dispositif préalablement décrit, en regard de l'échantillon 50, de telle sorte que la surface examinée soit placée dans la plan focal objet 5.1 du système optique 3.

2$^{ième}$ étape 120 : illumination de l'échantillon en dirigeant un faisceau lumineux 20 contre la surface de l'échantillon, la partie de la surface illuminée constituant la zone élémentaire illuminée 18.

3$^{ième}$ étape 130 : collection d'un deuxième signal optique $52_1$, $52_2$, $52_3$, $52_4$... $52_n$ respectivement rétrodiffusé par l'échantillon, au niveau de chaque zone élémentaire de détection $28_1$, $28_2$, $28_3$, $28_4$... $28_n$, par la fibre optique $22_1$, $22_2$, $22_3$, $22_4$... $22_n$ de détection dont l'extrémité distale $26_1$, $26_2$, $26_3$, $26_4$... $26_n$ est conjuguée à ladite zone élémentaire $28_1$, $28_2$, $28_3$, $28_4$... $28_n$.

4$^{ième}$ étape 140 : mesure, à l'aide d'un deuxième photodétecteur 40, du signal $S_n$ représentatif de chaque signal optique rétrodiffusé $52_n$ à chaque distance $D_n$ de la zone élémentaire d'illumination. Le signal $S_n$ peut être notamment établi en cumulant les signaux optiques collectés par les fibres optiques de détection d'un même groupe.

5$^{ième}$ étape 150 : A l'aide de chaque signal $S_n$ correspondant à une distance de rétrodiffusion $D_n$, détermination d'une fonction $R_n$ appelée réflectance du signal, cette réflectance étant obtenue en fonction du signal $S_n$ et de paramètres de calibration. Ainsi, $R_n = f_{calib}(S_n)$, ou $f_{calib}$ désigne une fonction de calibration, dépendant de l'instrumentation mise en œuvre, par exemple l'efficacité de collection par les fibres, la fonction de réponse du détecteur et l'intensité du faisceau lumineux incident. La fonction de calibration $f_{calib}$ peut être obtenue au cours d'une phase de calibration, préalablement ou postérieurement à la mesure sur l'échantillon.

Par exemple, la réflectance $R_n$ peut être obtenue, à partir de $S_n$, selon l'expression :

$$R_n = f_{calib}(S_n) = \frac{S_n - S_{ref}}{S_{source}}$$

ou selon l'expression

$$R_n = f_{calib}(S_n) = \frac{S_n - S_{ref}}{S_{source}} \times \frac{R_{std-n}}{S_{std-n}}$$

où :

- $S_n$ est le signal détecté correspondant à la distance $D_n$ de la zone élémentaire d'illumination.
- $S_{ref}$ est un signal de calibration, traduisant les réflexions parasites du système optique, obtenu en activant la source de lumière, mais sans présence de l'échantillon, ce dernier étant remplacé par un élément absorbant, tel un écran noir.
- $S_{source}$ est le signal produit par la source de lumière.
- $S_{std-n}$ est un signal de rétrodiffusion mesuré, en considérant une distance de rétrodiffusion $D_n$, sur un fantôme, dont les propriétés optiques (absorption, diffusion) sont connues, en utilisant le même dispositif que celui mis en œuvre pour acquérir le signal Sn.
- $R_{std-n}$ est une estimation de la réflectance produite, par ledit fantôme, à la distance de rétrodiffusion $D_n$.

D'une façon générale, la réflectance représente l'intensité du signal rétrodiffusé. Elle est normalisée par l'intensité du faisceau incident au détecteur, auquel cas elle représente une fraction du faisceau incident rétrodiffusée à la distance de rétrodiffusion considérée.

6ième étape 160 : pour au moins une longueur d'onde $\lambda$, et en considérant au moins deux distances $D_n$ de rétrodiffusion, détermination du couple $(\mu_a(\lambda), \mu'_s(\lambda))$ présentant le moindre écart entre la réflectance mesurée $R_n(\lambda)$, à la longueur d'onde $\lambda$, et une réflectance modélisée $R_{n,\mu_a,\mu_s}^{model}(\lambda)$ pour différentes valeurs de $\mu_0(\lambda)$ et de $\mu'_s(\lambda)$, à une distance de rétrodiffusion $D_n$. Cette détermination peut être réalisée par la minimisation d'un écart quadratique, et par exemple selon l'expression :

$$\left(\mu_a(\lambda), \mu'_s(\lambda)\right) = argmin_{\left(\mu_a(\lambda),\mu'_s(\lambda)\right)}\left(\sum_{n=1}^{N}\left(R_{n,\mu a,\mu s\prime}^{model}(\lambda) - R_n(\lambda)\right)^2\right)$$

où :

- N désigne le nombre de distances prises en compte,
- $R_{n,\mu a,\mu s\prime}^{model}$ est une fonction de réflectance modélisée, établie pour la distance de rétrodiffusion $D_n$, et pour un couple de valeurs $\mu_a$ et $\mu_s'$.

Les différentes valeurs de réflectance modélisée $R_{n,\mu a,\mu s\prime}^{model}$ sont obtenues, pour une pluralité de couples de valeurs $\mu_a$, $\mu_s'$ au cours d'une phase de calibration, par simulation numérique, ou expérimentalement, sur des échantillons étalons dont les propriétés optiques sont connues.

Pour une distance de rétrodiffusion $D_n$ donnée, on peut représenter une pluralité de réflectances $R_{n,\mu a,\mu s\prime}^{model}$ modélisées en fonction de $\mu a$ et de $\mu s'$. La figure 11 donne un exemple de représentation de telles réflectances modélisées à une distance de rétrodiffusion de 185 $\mu$m, sous la forme d'une table de calibration, ou LUT, acronyme de Look Up Table. Chaque point de la nappe représentée sur la figure 11 correspond à une estimation de la réflectance, à ladite distance de rétrodiffusion, en fonction du coefficient d'absorption $\mu_3$ et la valeur du coefficient de diffusion réduit $\mu_s'$.

D'une façon générale, la notation $R_{n,p}^{model}$, désigne une réflectance modélisée à la distance de rétrodiffusion $D_n$, en prenant en compte des valeurs prédéterminées d'au moins un paramètre optique p. Le paramètre p peut correspondre à une propriété optique, par exemple $\mu s'$, ou un ensemble de propriétés optiques, par exemple $(\mu a, \mu s')$.

Les propriétés optiques déterminées, et en particulier $\mu_s'$, peuvent être alors utilisées pour déterminer la fonction de correction d'un spectre Raman, par l'intermédiaire du facteur de correction $\beta$, selon l'expression (2).

Les étapes 150 et 160 sont mises en œuvre par le microprocesseur 48 (ou par le microprocesseur 9 le cas échéant), préalablement programmé à cet effet, et dont les données d'entrée sont les mesures réalisées par le deuxième photodétecteur 40.

Lorsque le deuxième photodétecteur 40 est pourvu d'une fonction spectrométrique, les procédés précédemment décrits peuvent être mises en œuvre pour une pluralité de longueurs d'onde ou de bandes spectrales différentes. Dans ce cas, on obtient les différentes propriétés optiques en fonction de la longueur d'onde ou de la bande spectrale considérée.

Dans l'application visée, l'utilisation d'un détecteur spectrométrique n'est pas rendue nécessaire, dans la mesure où une détermination des propriétés optiques à une longueur d'onde est suffisante, en l'occurrence la longueur d'onde de la source laser 1, en l'occurrence 532 nm.

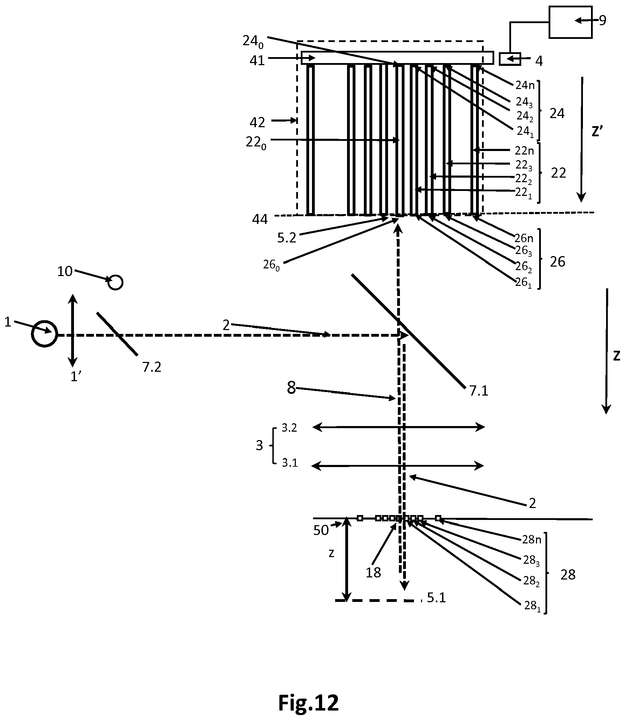

Selon un autre mode de réalisation, représenté sur la figure 12, la deuxième source de lumière 10 est disposée face à la lame semi-réfléchissante 7.2. Le deuxième faisceau lumineux est réfléchi par la deuxième lame semi-réfléchissante 7.2, puis par la première lame semi-réfléchissante 7.1 en direction de l'échantillon.

L'intérêt de cette configuration est qu'elle permet de collecter un signal optique retrodiffusé sous un angle de 180°, c'est-à-dire rétrodiffusé parallèlement au faisceau lumineux 20, transmis par la lame semi-réfléchissante 19 vers une fibre optique de détection $22_0$, coaxiale dudit faisceau lumineux 20, cette fibre optique étant conjuguée à la zone élémentaire d'illumination 18 formée par la trace du faisceau d'illumination 20 sur la surface de l'échantillon.

Cette fibre de détection $22_0$ peut également être couplée, par son extrémité proximale $24_0$, au spectromètre Raman 4. Le plan focal 44 constitue le plan focal image 5.2 du système optique 3. Ainsi, l'extrémité distale $26_0$ de cette fibre de détection $22_0$ fait office de filtre spatial 6, et, de façon équivalente à un sténopé, place le spectromètre Raman 4 dans une configuration confocale. La fenêtre 6.1 du filtre spatial 6 correspond alors au cœur de ladite fibre, collectant le premier signal optique.

Un autre avantage de ce mode de réalisation est qu'il permet de remplacer, de façon optionnelle, le premier photodétecteur 4 et le deuxième photodétecteur 40 en un seul et même photodétecteur commun.

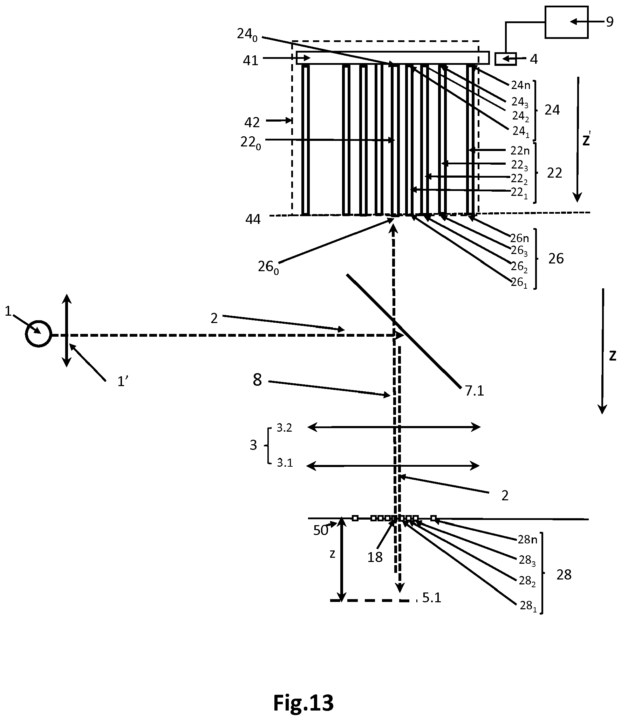

Selon un autre mode de réalisation, représenté sur la figure 13, la source laser 1 est utilisée comme source de lumière pour les deux modalités, à savoir l'acquisition du spectre Raman et la détermination des propriétés optiques de l'échantillon. En effet, comme précédemment évoqué, les inventeurs ont considéré que la connaissance des propriétés optiques, en particulier le coefficient de diffusion $\mu s'$, à la longueur d'onde du faisceau laser seulement, permettait d'effectuer une correction du spectre Raman de façon efficace.

Ainsi, le dispositif bimodal peut ne comporter qu'une seule source de lumière, ce qui permet une simplification du dispositif.

## Revendications

**1.** Procédé de correction d'un spectre Raman produit par un échantillon (50) comportant les étapes suivantes :

   a) illumination d'une surface de l'échantillon (50) par un premier faisceau lumineux (2), produit par une première source de lumière (1), ladite première source de lumière (1) étant une source laser couplée à un premier système optique (3), apte à focaliser ledit premier faisceau lumineux dans un plan focal objet (5.1) dudit premier système optique, ledit plan focal objet étant situé, dans l'échantillon, à une profondeur z, dite profondeur de mesure, de la surface de l'échantillon,

   b) mesure, à l'aide d'un premier photodétecteur (4), d'un premier signal optique (8) rétrodiffusé par l'échantillon (50) en réponse audit premier faisceau lumineux (2), le premier photodétecteur (4) étant un spectrophotomètre Raman produisant un spectre Raman $SP_z$ représentatif dudit premier signal optique (8), un filtre spatial (6) étant interposé entre ledit premier système optique (3) et le premier photodétecteur (4), ledit filtre spatial comportant une fenêtre (6.1) apte à transmettre ledit premier signal optique vers ledit premier photodétecteur (4), ladite fenêtre (6.1) étant disposée dans un plan focal conjugué (5.2) dudit plan focal objet (5.1) dudit premier système optique,

   **caractérisé en ce que** le procédé comporte également les étapes suivantes :

c) détermination d'un coefficient de diffusion réduit $\mu s'$ ou d'un coefficient de diffusion $\mu s$ dudit échantillon ;

d) détermination d'un terme de correction $\beta$, en fonction du coefficient de diffusion réduit ou du coefficient de diffusion ,

e) prise en compte d'une profondeur seuil $z_t$, à partir de laquelle le spectre mesuré n'évolue plus de façon significative ;

f) mesure, à l'aide du premier photodétecteur (4) d'un spectre Raman de profondeur $SP_{depth}$, représentatif du premier signal optique (8) rétrodiffusé par l'échantillon (50) en réponse au premier faisceau lumineux (2), lorsque le premier plan focal objet (5.1) est situé, dans l'échantillon, à une profondeur $z_{depth}$ de la surface, ladite profondeur $z_{depth}$ étant supérieure à la profondeur seuil $z_t$,

g) application d'une fonction de correction Fcorr au spectre Raman $SP_z$ de façon à générer un premier signal corrigé $SP_{corr-z}$, ladite fonction de correction prenant en compte le spectre Raman de profondeur $SP_{depth}$ et le terme de correction $\beta$.

2. Procédé de correction selon la revendication 1, **caractérisé en ce qu'**il comprend également la détermination de ladite profondeur z entre ledit premier plan focal objet (5.1) dudit premier système optique et ladite surface de l'échantillon, ladite fonction de correction Fcorr prenant en compte ladite profondeur z.

3. Procédé de correction selon la revendication 1, dans lequel la fonction de correction comprend une fonction exponentielle croissante, l'exposant de l'exponentielle dépendant dudit terme de correction $\beta$ et de ladite profondeur z.

4. Procédé de correction selon la revendication 3, dans lequel la fonction de correction comprend un produit dudit spectre Raman $SP_z$ par ladite exponentielle croissante.

5. Procédé de correction selon la revendication 4, dans lequel la fonction de correction comprend une addition dudit spectre Raman en profondeur $SP_{depth}$ audit produit dudit spectre Raman $SP_z$ par ladite exponentielle croissante.

6. Procédé selon l'une quelconque des revendications précédentes, dans lequel la détermination de ladite propriété optique comprend les étapes de :

  - deuxième illumination d'une surface de l'échantillon à l'aide d'un deuxième faisceau lumineux (20), de façon à former, à la surface dudit échantillon, une zone élémentaire d'illumination (18), correspondant à la partie de ladite surface éclairée par ledit deuxième faisceau lumineux,
  - détection de N deuxièmes signaux optiques ($52_1$, $52_2$, $52_3$, $52_4$, $52_n$), rétrodiffusés par l'échantillon, chaque deuxième signal optique émanant de la surface de l'échantillon à une distance $D_1$, $D_2$, $D_3$, $D_4$, $D_n$, dite distance de rétrodiffusion, de ladite zone élémentaire d'illumination, N étant un entier supérieur ou égal à 1, de manière à former des deuxièmes signaux détectés $S_1$, $S_2$, $S_3$, $S_4$, $S_n$,
  - détermination d'au moins une propriété optique de diffusion p de l'échantillon, par comparaison entre :

    ■ une fonction $R_1$, $R_2$, $R_3$, $R_4$, $R_n$ de chaque deuxième signal ainsi détecté $S_1$, $S_2$, $S_3$, $S_4$, $S_n$,
    ■ et une pluralité d'estimations de ladite fonction $R_{1,p}^{model}$, $R_{2,p}^{model}$, $R_{3,p}^{model}$, $R_{4,p}^{model}$, $R_{n,p}^{model}$ chaque estimation étant réalisée en considérant une valeur prédéterminée de ladite propriété optique p.

7. Procédé selon la revendication 6, dans lequel au moins une distance de rétrodiffusion $D_1$, $D_2$, $D_3$, $D_4$, $D_n$ est inférieure à 200 $\mu$m.

8. Dispositif de caractérisation d'un échantillon (50), comprenant :

  - une première source de lumière (1), comprenant une source laser, apte à émettre un premier faisceau lumineux (2) vers la surface dudit échantillon (50),
  - un premier système optique (3), apte à focaliser ledit premier faisceau lumineux (2) dans un plan focal objet (5.1),
  - un premier photodétecteur (4), le premier photodétecteur comportant un spectromètre Raman,
  - un filtre spatial (6), interposé entre ledit premier système optique (3) et ledit photodétecteur (4), ledit filtre spatial comportant une fenêtre (6.1) apte à transmettre un premier signal optique (8), rétrodiffusé par ledit échantillon lorsqu'il est exposé audit premier faisceau lumineux (2) vers ledit premier photodétecteur (4), ladite fenêtre étant disposée dans le plan focal (5.2) conjugué dudit plan focal objet (5.1), le premier photodétecteur étant apte à détecter ledit premier signal optique (8) et à former un spectre Raman $SP_z$;

  **caractérisé en ce que** le dispositif comporte :

- un microprocesseur (9), apte à corriger le spectre Raman $SP_z$ formé par le premier photodétecteur, en mettant en œuvre les étapes c) à g) d'un procédé objet de l'une quelconque des revendications 1 à 7.

9. Dispositif de caractérisation d'un échantillon selon la revendication 8, comportant également :

- une deuxième source de lumière (10), apte à émettre un deuxième faisceau lumineux (20) vers une surface dudit échantillon, de façon à former, sur ladite surface, une zone élémentaire d'illumination (18),
- au moins une fibre optique de détection (22), s'étendant entre une extrémité proximale (24), apte à être couplée à un deuxième photodétecteur (40) et une extrémité distale (26), apte à collecter au moins un deuxième signal optique (52) rétrodiffusé par l'échantillon lorsqu'il est exposé audit deuxième faisceau lumineux,
- un deuxième système optique comportant tout ou partie du premier système optique (3), ledit deuxième système optique présentant un facteur de grandissement et un axe optique,
- ledit deuxième système optique (3) étant apte à conjuguer l'extrémité distale de chaque fibre optique de détection (26) à une zone élémentaire de détection (28, 28n) située sur la surface de l'échantillon,

de telle sorte que la distance $D_n$ entre la zone élémentaire d'illumination et chaque zone élémentaire de détection, perpendiculairement audit axe optique, est fonction dudit facteur de grandissement.

10. Dispositif selon la revendication précédente, dans ledit deuxième système optique est également apte à conjuguer ladite deuxième source de lumière (10) à une zone élémentaire d'illumination (18), située à la surface de l'échantillon.

11. Dispositif de caractérisation d'un échantillon selon la revendication 9 ou la revendication 10, comportant également un élément de renvoi (7, 7.1, 7.2), apte à diriger :

- ledit premier faisceau lumineux (2) vers l'échantillon (50),
- ou ledit premier signal optique (8) rétrodiffusé par l'échantillon (50) vers ledit premier photodétecteur (4),
- ou ledit deuxième faisceau lumineux (20) vers l'échantillon (50),
- ou ledit deuxième signal optique (52) rétrodiffusé par l'échantillon (50) vers ledit deuxième photodétecteur (40).

12. Dispositif de caractérisation d'un échantillon selon l'une quelconque des revendications 9 à 11, comportant

- une première fibre optique de détection ($22_1$), dont l'extrémité distale est située à une première distance $d_1$ dudit deuxième faisceau lumineux (20),
- une deuxième fibre optique de détection ($22_2$), dont l'extrémité distale est située à une deuxième distance $d_2$ dudit deuxième faisceau lumineux (20), ladite deuxième distance étant supérieure à ladite première distance.

13. Dispositif de caractérisation d'un échantillon selon l'une quelconque des revendications 9 à 12, dans lequel la deuxième source de lumière (10) comporte une fibre optique d'illumination (12), s'étendant entre

- une extrémité proximale (14), apte à recevoir une lumière,
- et une extrémité distale (16), apte à émettre ledit deuxième faisceau lumineux en direction de la surface de l'échantillon (50).

14. Dispositif de caractérisation d'un échantillon selon l'une quelconque des revendications 9 à 13, dans lequel lesdits premier système et deuxième système optiques sont confondus et forment un système optique commun (3).

15. Dispositif selon la revendication 14, dans lequel une fibre optique de détection ($22_0$) est disposée dans ledit plan focal conjugué (5.2) dudit plan focal objet (5.1) dudit système optique commun, ladite fibre optique de détection étant apte à transmettre ledit premier signal optique vers le premier photodétecteur (4) ou vers le deuxième photodétecteur (40).

16. Dispositif selon la revendication précédente, dans lequel le premier photodétecteur (4) et le deuxième photodétecteur (40) forment un même photodétecteur.

17. Dispositif selon l'une quelconque des revendications 15 ou 16, dans lequel la première source de lumière et la deuxième source de lumière forment une même source de lumière.

**Patentansprüche**

1. Verfahren zur Korrektur eines Raman-Spektrums, das von einer Probe (50) erzeugt wurde, umfassend die folgenden Schritte:

   a) Beleuchten einer Oberfläche der Probe (50) durch ein erstes Lichtbündel (2), das von einer ersten Lichtquelle (1) erzeugt wird, wobei die erste Lichtquelle (1) eine Laserquelle ist, die mit einem ersten optischen System (3) gekoppelt ist, das geeignet ist, das erste Lichtbündel in einer Objektbrennebene (5.1) des ersten optischen Systems zu fokussieren, wobei sich die Objektbrennebene in der Probe in einer Tiefe z, der Messtiefe, von der Oberfläche der Probe befindet,
   b) Messen, mithilfe eines ersten Photodetektors (4), eines ersten optischen Signals (8), das von der Probe (50) in Reaktion auf das erste Lichtbündel (2) rückgestreut wird, wobei der erste Photodetektor (4) ein Raman-Spektrophotometer ist, das ein Raman-Spektrum SPz erzeugt, das für das erste optische Signal (8) repräsentativ ist, wobei ein Raumfilter (6) zwischen dem ersten optischen System (3) und dem ersten Photodetektor (4) angeordnet ist, wobei der Raumfilter ein Fenster (6.1) aufweist, das geeignet ist, das erste optische Signal zu dem ersten Photodetektor (4) hin zu übertragen,

   wobei das Fenster (6.1) in einer konjugierten Brennebene (5.2) der Objektbrennebene (5.1) des ersten optischen Systems angeordnet ist,
   **dadurch gekennzeichnet, dass** das Verfahren ebenfalls die folgenden Schritte umfasst:

   c) Bestimmen eines verringerten Diffusionskoeffizienten $\mu s'$ oder eines Diffusionskoeffizienten $\mu s$ der Probe;
   d) Bestimmen eines Korrekturterms $\beta$ in Abhängigkeit von dem verringerten Diffusionskoeffizienten oder dem Diffusionskoeffizienten,
   e) Berücksichtigen einer Schwellentiefe zt, anhand welcher sich das gemessene Spektrum nicht mehr signifikant bewegt;
   f) Messen, mithilfe des ersten Photodetektors (4) eines Raman-Spektrums einer Tiefe $SP_{depth}$, die für das erste optische Signal (8) repräsentativ ist, das von der Probe (50) in Reaktion auf das erste Lichtbündel (2) rückgestreut wird, wenn sich die erste Objektbrennebene (5.1) in der Probe in einer Tiefe $z_{depth}$ von der Oberfläche befindet, wobei die Tiefe $z_{depth}$ größer als die Schwellentiefe zt ist,
   g) Anwenden einer Korrekturfunktion Fcorr auf das Raman-Spektrum SPz, um ein erstes korrigiertes Signal $SP_{corr-z}$ zu erzeugen, wobei die Korrekturfunktion das Raman-Spektrum der Tiefe $SP_{depth}$ und den Korrekturterm $\beta$ berücksichtigt.

2. Korrekturverfahren nach Anspruch 1, **dadurch gekennzeichnet, dass** es ebenfalls das Bestimmen der Tiefe z zwischen der ersten Objektbrennebene (5.1) des ersten optischen Systems und der Oberfläche der Probe umfasst, wobei die Korrekturfunktion Fcorr die Tiefe z berücksichtigt.

3. Korrekturverfahren nach Anspruch 1, wobei die Korrekturfunktion eine ansteigende Exponentialfunktion umfasst, wobei der Exponent des Exponentialwerts vom Korrekturterm $\beta$ und von der Tiefe z abhängt.

4. Korrekturverfahren nach Anspruch 3, wobei die Korrekturfunktion ein Produkt des Raman-Spektrums SPz und des ansteigenden Exponentialwerts umfasst.

5. Korrekturverfahren nach Anspruch 4, wobei die Korrekturfunktion eine Addition des Raman-Spektrums in der Tiefe $SP_{depth}$ zu dem Produkt des Raman-Spektrums SPz und des ansteigenden Exponentialwerts umfasst.

6. Verfahren nach einem der vorhergehenden Ansprüche, wobei das Bestimmen der optischen Eigenschaft die folgenden Schritte umfasst:

   - zweites Beleuchten einer Oberfläche der Probe mithilfe eines zweiten Lichtbündels (20), um auf der Oberfläche der Probe einen elementaren Beleuchtungsbereich (18) zu bilden, der dem Abschnitt der Oberfläche entspricht, die von dem zweiten Lichtbündel beleuchtet wird,
   - Detektieren von N zweiten optischen Signalen ($52_1$, $52_2$, $52_3$, $52_4$, $52_n$), die von der Probe rückgestreut werden, wobei jedes zweite optische Signal von der Oberfläche der Probe in einem Abstand $D_1$, $D_2$, $D_3$, $D_4$, $D_n$, dem Rückstreuungsabstand, von dem elementaren Beleuchtungsbereich ausgeht, wobei N eine Ganzzahl größer oder gleich 1 ist, um zweite detektierte Signale $S_1$, $S_2$, $S_3$, $S_4$, $S_n$ zu bilden,
   - Bestimmen mindestens einer optischen Diffusionseigenschaft p der Probe durch Vergleich zwischen:

- einer Funktion $R_1$, $R_2$, $R_3$, $R_4$, $R_n$ jedes so detektierten zweiten Signals $S_1$, $S_2$, $S_3$, $S_4$, $S_n$,
- und eine Mehrzahl von Schätzungen der Funktion $R_{1,p}^{model}$, $R_{2,p}^{model}$, $R_{3,p}^{model}$, $R_{4,p}^{model}$, $R_{n,p}^{model}$, wobei jede Schätzung unter Berücksichtigung eines vorbestimmten Werts der optischen Eigenschaft p durchgeführt wird.

7. Verfahren nach Anspruch 6, wobei mindestens ein Rückstreuungsabstand $D_1$, $D_2$, $D_3$, $D_4$, $D_n$ geringer als 200 $\mu$m ist.

8. Vorrichtung zur Charakterisierung einer Probe (50), umfassend:

    - eine erste Lichtquelle (1), umfassend eine Laserquelle, die geeignet ist, ein erstes Lichtbündel (2) zu der Oberfläche der Probe (50) hin zu emittieren,
    - ein erstes optisches System (3), das geeignet ist, das erste Lichtbündel (2) in einer Objektbrennebene (5.1) zu fokussieren,
    - einen ersten Photodetektor (4), wobei der erste Photodetektor ein Raman-Spektrometer aufweist,
    - einen Raumfilter (6), der zwischen dem ersten optischen System (3) und dem Photodetektor (4) angeordnet ist, wobei der Raumfilter ein Fenster (6.1) aufweist, das geeignet ist, ein erstes optisches Signal (8), das von der Probe rückgestreut wird, wenn sie dem ersten Lichtbündel (2) ausgesetzt ist, zu dem ersten Photodetektor (4) hin zu übertragen, wobei das Fenster in der konjugierten Brennebene (5.2) der Objektbrennebene (5.1) angeordnet ist, wobei der erste Photodetektor geeignet ist, das erste optische Signal (8) zu detektieren und ein Raman-Spektrum SPz zu bilden; **dadurch gekennzeichnet, dass** die Vorrichtung Folgendes aufweist:
    - einen Mikroprozessor (9), der geeignet ist, das Raman-Spektrum SPz, das von dem ersten Photodetektor gebildet ist, zu korrigieren, indem die Schritte c) bis g) eines Verfahrens nach einem der Ansprüche 1 bis 7 durchgeführt werden.

9. Vorrichtung zur Charakterisierung einer Probe nach Anspruch 8, ebenfalls aufweisend:

    - eine zweite Lichtquelle (10), die geeignet ist, ein zweites Lichtbündel (20) zu einer Oberfläche der Probe hin zu emittieren, um auf der Oberfläche einen elementaren Beleuchtungsbereich (18) zu bilden,
    - mindestens eine optische Detektionsfaser (22), die sich zwischen einem nahen Ende (24), das geeignet ist, mit einem zweiten Photodetektor (40) gekoppelt zu sein, und einem entfernten Ende (26), das geeignet ist, mindestens ein zweites optisches Signal (52) zu erfassen, das von der Probe rückgestreut wird, wenn sie dem zweiten Lichtbündel ausgesetzt ist, erstreckt,
    - ein zweites optisches System, das das gesamte erste optische System (3) oder einen Teil davon aufweist, wobei das zweite optische System einen Vergrößerungsfaktor und eine optische Achse aufweist,
    - wobei das zweite optische System (3) geeignet ist, das entfernte Ende jeder optischen Detektionsfaser (26) mit einem elementaren Detektionsbereich (28, 28n) zu konjugieren, der sich auf der Oberfläche der Probe befindet,

    so dass sich der Abstand $D_n$ zwischen dem elementaren Beleuchtungsbereich und jedem elementaren Detektionsbereich senkrecht zur optischen Achse vom Vergrößerungsfaktor abhängig ist.

10. Vorrichtung nach dem vorhergehenden Anspruch, wobei das zweite optische System ebenfalls geeignet ist, die zweite Lichtquelle (10) mit einem elementaren Beleuchtungsbereich (18) zu konjugieren, der sich auf der Oberfläche der Probe befindet.

11. Vorrichtung zur Charakterisierung einer Probe nach Anspruch 9 oder 10, ebenfalls aufweisend ein Rücksendeelement (7, 7.1, 7.2), das geeignet ist zum Leiten:

    - des ersten Lichtbündels (2) zu der Probe (50) hin,
    - oder des ersten optischen Signals (8), das von der Probe (50) rückgestreut wird, zum ersten Photodetektor (4) hin,
    - oder des zweiten Lichtbündels (20) zu der Probe (50) hin,
    - oder des zweiten optischen Signals (52), das von der Probe (50) rückgestreut wird, zum zweiten Photodetektor (40) hin.

12. Vorrichtung zur Charakterisierung einer Probe nach einem der Ansprüche 9 bis 11, aufweisend

    - eine erste optische Detektionsfaser ($22_1$), deren entferntes Ende sich in einem ersten Abstand $d_1$ von dem

zweiten Lichtbündel (20) befindet,
- eine zweite optische Detektionsfaser (22$_2$), deren entferntes Ende sich in einem zweiten Abstand d$_2$ von dem zweiten Lichtbündel (20) befindet, wobei der zweite Abstand größer als der erste Abstand ist.

13. Vorrichtung zur Charakterisierung einer Probe nach einem der Ansprüche 9 bis 12, wobei die zweite Lichtquelle (10) eine optische Beleuchtungsfaser (12) aufweist, sich erstreckend zwischen

    - einem nahen Ende (14), das geeignet ist, ein Licht zu empfangen,
    - und einem entfernten Ende (16), das geeignet ist, das zweite Lichtbündel zur Oberfläche der Probe (50) hin zu emittieren.

14. Vorrichtung zur Charakterisierung einer Probe nach einem der Ansprüche 9 bis 13, wobei das erste und das zweite optische System vermischt sind und ein gemeinsames optisches System (3) bilden.

15. Vorrichtung nach Anspruch 14, wobei eine optische Detektionsfaser (22$_0$) in der konjugierten Brennebene (5.2) der Objektbrennebene (5.1) des gemeinsamen optischen Systems angeordnet ist, wobei die optische Detektionsfaser geeignet ist, das erste optische Signal zu dem ersten Photodetektor (4) oder dem zweiten Photodetektor (40) hin zu übertragen.

16. Vorrichtung nach dem vorhergehenden Anspruch, wobei der erste Photodetektor (4) und der zweite Photodetektor (40) einen selben Photodetektor bilden.

17. Vorrichtung nach einem der Ansprüche 15 oder 16, wobei die erste Lichtquelle und die zweite Lichtquelle eine selbe Lichtquelle bilden.


**Claims**

1. Method for correcting a Raman spectrum produced by a sample (50), comprising the following steps:

    a) illuminating a surface of the sample (50) with a first light beam (2) produced by a first light source (1), said first light source (1) being a laser source coupled to a first optical system (3), able to focus said first light beam on an object focal plane (5.1) of said first optical system, said object focal plane being located, in the sample, at a depth z, called the measurement depth, from the surface of the sample,
    b) measuring, using a first photodetector (4), a first optical signal (8) backscattered by the sample (50) in response to said first light beam (2), the first photodetector (4) being a Raman spectrophotometer that produces a Raman spectrum SP$_z$ representative of said first optical signal (8), a spatial filter (6) being interposed between said first optical system (3) and the first photodetector (4), said spatial filter comprising a window (6.1) able to transmit said first optical signal towards said first photodetector (4),
    said window (6.1) being placed in a conjugate focal plane (5.2) of said object focal plane (5.1) of said first optical system,

    **characterized in that** the method also comprises the following steps:

    c) determining a reduced scattering coefficient $\mu s'$ or a scattering coefficient $\mu s$ of said sample;
    d) determining a correction term $\beta$, depending on the reduced scattering coefficient or the scattering coefficient,
    e) taking into account a threshold depth zt, from which the measured spectrum no longer significantly varies;
    f) measuring, using the first photodetector (4) a Raman depth spectrum SP$_{depth}$ representative of the first optical signal (8) backscattered by the sample (50) in response to the first light beam (2), when the first object focal plane (5.1) is located, in the sample, at a depth z$_{depth}$ from the surface, said depth z$_{depth}$ being larger than the threshold depth z$_t$,
    g) applying a correction function Fcorr to the Raman spectrum SP$_z$ so as to generate a corrected first signal SP$_{corr-z}$, the said correction function taking into account the Raman depth spectrum SP$_{depth}$ and the correction term $\beta$.

2. Correcting method according to Claim 1, **characterized in that** it also comprises determining said depth z between said first object focal plane (5.1) of said first optical system and said surface of the sample, said correction function Fcorr taking into account said depth z.

3. Correcting method according to Claim 1, wherein the correction function comprises an increasing exponential function, the exponent of the exponential depending on said correction term $\beta$ and on said depth z.

4. Correcting method according to Claim 3, wherein the correction function comprises a product of said Raman spectrum $SP_z$ and of said increasing exponential.

5. Correcting method according to Claim 4, wherein the correction function comprises an addition of said Raman depth spectrum $SP_{depth}$ to said product of said Raman spectrum $SP_z$ and of said increasing exponential.

6. Method according to any one of the preceding claims, wherein the determination of said optical property comprises steps of:

   - illuminating a second time a surface of the sample using a second light beam (20), so as to form, on the surface of said sample, an elementary illumination zone (18) corresponding to the portion of said surface illuminated by said second light beam,
   - detecting N second optical signals ($52_1$, $52_2$, $52_3$, $52_4$, $52_n$) backscattered by the sample, each second optical signal emanating from the surface of the sample at a distance $D_1$, $D_2$, $D_3$, $D_4$, $D_n$, called the backscattering distance, from said elementary illumination zone, N being an integer higher than or equal to 1, so as to form second detected signals $S_1$, $S_2$, $S_3$, $S_4$, $S_n$,
   - determining at least one scattering optical property p of the sample, by comparison between:

      ▪ a function $R_1$, $R_2$, $R_3$, $R_4$, $R_n$ of each second signal thus detected $S_1$, $S_2$, $S_3$, $S_4$, $S_n$,
      ▪ and a plurality of estimations of said function $R_{1,p}^{model}$, $R_{2,p}^{model}$, $R_{3,p}^{model}$, $R_{4,p}^{model}$, $R_{n,p}^{model}$, each estimation being made by considering a preset value of said optical property p.

7. Method according to Claim 6, wherein at least one backscattering distance $D_1$, $D_2$, $D_3$, $D_4$, $D_n$ is smaller than 200 $\mu$m.

8. Device for characterizing a sample (50), comprising:

   - a first light source (1), comprising a laser source, able to emit a first light beam (2) toward the surface of said sample (50),
   - a first optical system (3), able to focus said first light beam (2) on an object focal plane (5.1),
   - a first photodetector (4), the first photodetector comprising a Raman spectrometer,
   - a spatial filter (6), interposed between said first optical system (3) and said photodetector (4), said spatial filter comprising a window (6.1) able to transmit a first optical signal (8), backscattered by said sample when it is exposed to said first light beam (2), toward said first photodetector (4), said window being placed in the conjugate focal plane (5.2) of said object focal plane (5.1), the first photodetector being able to detect said first optical signal (8) and to form a Raman spectrum $SP_z$;

   **characterized in that** the device comprises:

   - a microprocessor (9), able to correct the Raman spectrum $SP_z$ formed by the first photodetector, by implementing steps c) to g) of a method according to any one of Claims 1 to 7.

9. Device for characterizing a sample according to Claim 8, also comprising:

   - a second light source (10), able to emit a second light beam (20) toward a surface of said sample, so as to form, on said surface, an elementary illumination zone (18),
   - at least one detecting optical fibre (22), extending between a near end (24), able to be coupled to a second photodetector (40) and a far end (26), able to collect at least one second optical signal (52) backscattered by the sample when it is exposed to said second light beam,
   - a second optical system comprising all or some of the first optical system (3), said second optical system having a magnification and an optical axis,
   - said second optical system (3) being able to conjugate the far end of each detecting optical fibre (26) with an elementary detection zone (28, 28n) located on the surface of the sample,

such that the distance $D_n$ between the elementary illumination zone and each elementary detection zone, perpendicular to said optical axis, is dependent on said magnification.

**10.** Device according to the preceding claim, wherein said second optical system is also able to conjugate said second light source (10) with an elementary illumination zone (18) located on the surface of the sample.

**11.** Device for characterizing a sample according to Claim 9 or Claim 10, also comprising a steering element (7, 7.1, 7.2), able to direct:

- said first light beam (2) toward the sample (50),
- or said first optical signal (8) backscattered by the sample (50) toward said first photodetector (4),
- or said second light beam (20) toward the sample (50),
- or said second optical signal (52) backscattered by the sample (50) toward said second photodetector (40).

**12.** Device for characterizing a sample according to any one of Claims 9 to 11, comprising

- a first detecting optical fibre ($22_1$), the far end of which is located at a first distance $d_1$ from said second light beam (20),
- a second detecting optical fibre ($22_2$) the far end of which is located at a second distance $d_2$ from said second light beam (20), said second distance being larger than said first distance.

**13.** Device for characterizing a sample according to any one of Claims 9 to 12, wherein the second light source (10) comprises an illuminating optical fibre (12) extending between

- a near end (14) able to receive light,
- and a far end (16) able to emit said second light beam in the direction of the surface of the sample (50).

**14.** Device for characterizing a sample according to any one of Claims 9 to 13, wherein said first optical system and second optical system are merged and form a common optical system (3).

**15.** Device according to Claim 14, wherein a detecting optical fibre ($22_0$) is placed in said conjugate focal plane (5.2) of said object focal plane (5.1) of said common optical system, said detecting optical fibre being able to transmit said first optical signal toward the first photodetector (4) or toward the second photodetector (40).

**16.** Device according to the preceding claim, wherein the first photodetector (4) and the second photodetector (40) are one and the same photodetector.

**17.** Device according to either one of Claims 15 and 16, wherein the first light source and the second light source are one and the same light source.

**Fig.1**

**Fig.2**

**Fig.3**

**Fig.4**

**Fig.5A**

**Fig.5B**

**Fig.5C**

**Fig.5D**

**Fig.6A**

**Fig.6B**

**Fig.6C**

**Fig.6D**

**Fig.7A**

**Fig.7B**

Fig. 8

Fig. 9

Fig. 10

Fig. 11

**Fig.12**

**Fig.13**

## RÉFÉRENCES CITÉES DANS LA DESCRIPTION

**Documents brevets cités dans la description**

- US 20110301438 A1

**Littérature non-brevet citée dans la description**

- **YANG et al.** Quantitative Raman spectrometry: The accurate détermination of analytes in solution phase of turbid média. *Chemometr. Intell. Lab.,* 2013, vol. 126, 6-10